# EUROPÄISCHE PATENTSCHRIFT

(11) **EP 3 350 044 B1**
(45) Veröffentlichungstag und Bekanntmachung des Hinweises auf die Patenterteilung: **31.08.2022**
(21) Anmeldenummer: 16766557.9
(22) Anmeldetag: 16.09.2016
(51) Int. Cl.: B60T 13/74

(54) **BAUGRUPPE MIT EINEM BREMSZYLINDER UND EINEM ELEKTROMECHANISCHEN BREMSKRAFTVERSTÄRKER MIT EINER DERARTIGEN BAUGRUPPE**
ASSEMBLY HAVING A BRAKE CYLINDER AND AN ELECTROMECHANICAL BRAKE BOOSTER
MODULE COMPRENANT UN CYLINDRE DE FREIN ET UN SERVOFREIN ÉLECTROMÉCANIQUE

(30) Priorität: 17.09.2015 DE 102015012125
(43) Veröffentlichungstag der Anmeldung: 25.07.2018
(73) Patentinhaber: Lucas Automotive GmbH, 56070 Koblenz (DE); ZF Friedrichshafen AG, 88046 Friedrichshafen (DE)
(72) Erfinder: WINGENDER, Kurt, 56244 Hartenfels (DE); HOFMANN, Martin, 56743 Mending (DE); KOETH, Boris, 56191 Weitersburg (DE); CALVO MARTINEZ, Jose Manuel, 56642 Kruft (DE); SPARFELD, Jens, 56357 Miehlen (DE); KAMMERS, Stefan, 54570 Oberstadtfeld (DE); WARKENTIN, Paul, 56567 Neuwied (DE); DECKER, Ingo, 88045 Friedrichshafen (DE); HUMM, Klemens, 88090 Immenstaad (DE); BAASCH, Detlef, 88094 Oberteuringen (DE)
(74) Vertreter: ZF Friedrichshafen AG
(86) Internationale Anmeldenummer: PCT/EP2016/072054
(87) Internationale Veröffentlichungsnummer: WO 2017/046381

(56) Entgegenhaltungen:
- EP-A1- 2 292 483
- EP-A1- 2 420 421
- WO-A1-2011/026804
- WO-A1-2011/036343
- WO-A1-2014/012702
- DE-A1-102013 217 745
- US-A1- 2014 208 894

## Beschreibung

### Technisches Gebiet

Die vorliegende Offenbarung betrifft allgemein das technische Gebiet von elektrohydraulischen Bremskrafterzeugungsvorrichtungen. Sie betrifft insbesondere eine Baugruppe mit einem Bremszylinder und einem elektromechanischen Bremskraftverstärker, der in einer elektrohydraulischen Fahrzeugbremsanlage eingesetzt werden kann.

### Stand der Technik

Elektromechanische Bremskraftverstärker werden von Elektromotoren angetrieben. Um eine Verstärkung der Bremskraft mit dem elektromechanischen Bremskraftverstärker erzeugen zu können, muss die Rotationsbewegung der Ausgangswelle des Elektromotors in eine translatorische Bewegung umgewandelt werden. Hierfür sind aus dem Stand der Technik verschiedene Vorrichtungen bekannt.

WO 2014/012702 A1 offenbart eine Betätigungseinrichtung für einen Hauptbremszylinder. Die Betätigungseinrichtung umfasst ein Gehäuse durch das ein Druckorgan zur Betätigung eines Betätigungskolbens des Hauptbremszylinders verläuft, einen Elektromotor und eine Schnecke, die durch den Elektromotor angetrieben wird und das Druckorgan kreuzt.

Das Dokument EP 2 292 483 A1 bezieht sich auf ein Bremshauptzylindersystem und einen elektrischen Bremskraftverstärker mit einer durch einen Motor gesteuerten Schubstange, die den vom Bremskraftverstärker erzeugten und / oder direkt auf das Bremspedal ausgeübten Druck auf den Hauptzylinder überträgt. Das System weist einen elektrischen Bremskraftverstärker mit einem Zahnstangenantrieb auf, der mit einem Betätigungskolben verbunden ist, um auf einen Tandemhauptzylinder einzuwirken. Der Kolben hat einen Flanschring, der ein Gehäuse mit einer kreisförmigen Schulter bildet, die eine Stützfläche für eine Reaktionsscheibe bildet. Der Flanschring bildet einen Stößel, der mit einer Steuerstange verbunden ist und in einer Hülse des Kolbens untergebracht ist, um den Verstärker zu steuern und im Falle eines Versagens des Verstärkers direkt auf die Scheibe einzuwirken. Der Kolben ist in einem normalen Betrieb durch ein Schlupfintervall von der Scheibe getrennt.

Aus dem Stand der Technik ist ferner ein elektromechanischer Bremskraftverstärker bekannt, der in dem Dokument EP 2 420 421 A1 offenbart ist. Der elektromechanische Bremskraftverstärker weist einen Elektromotor, eine Schubstange und eine Antriebseinrichtung zum Antreiben der Schubstange auf. Eine Antriebswelle des Elektromotors treibt ein erstes Zahnrad mit einer Außenverzahnung und ein zweites Zahnrad mit einer Innenverzahnung an. Das erste Zahnrad treibt ein erstes Getrieberad und das zweite Zahnrad ein zweites Getrieberad an. Das erste Getrieberad und das zweite Getrieberad greifen zum translatorischen Antreiben der Schubstange in eine Verzahnung an der Schubstange ein.

Aufgrund ihrer Konstruktion bzw. ihres komplexen Aufbaus bauen die aus dem Stand der Technik bekannten Vorrichtungen relativ groß. Die aus dem Stand der Technik bekannten Vorrichtungen nehmen in einem Fahrzeug relativ viel Bauraum ein. Dies gilt insbesondere dann, wenn diese Vorrichtungen an den in einem Fahrzeug vorgesehenen und zumeist von den Fahrzeugherstellern vorgegebenen Befestigungsstellen angebracht werden müssen.

### Kurzer Abriss

Es ist eine Baugruppe mit einem Bremszylinder und einem elektromechanischen Bremskraftverstärker mit verringertem Bauraumbedarf und verbesserter sowie bauraumsparender Ausrichtung bezüglich der in einem Fahrzeug vorgesehenen Befestigungsstellen anzugeben.

Vorgestellt wird eine Baugruppe mit Bremszylinder und elektromechanischem Bremskraftverstärker für eine elektrohydraulische Fahrzeugbremsanlage, mit einer Antriebsanordnung zum Antreiben wenigstens einer zum Betätigen des Bremszylinders ausgebildeten Betätigungseinrichtung, wobei die Antriebsanordnung wenigstens einen Elektromotor und ein Getriebe zum Koppeln des Elektromotors mit der wenigstens einen Betätigungseinrichtung aufweist, wobei wenigstens eine Befestigungseinrichtung zum Befestigen der Baugruppe an einem Fahrzeug vorgesehen ist, wobei die wenigstens eine Befestigungseinrichtung einen Flansch umfasst und eine Befestigungsebene BE definiert, wobei die Antriebsanordnung derart angeordnet ist, dass die Drehachse A₁ des Elektromotors senkrecht zur Längsachse der Betätigungseinrichtung und in einem Winkel von 60° bis 120° zur Befestigungsebene BE verläuft, wobei die wenigstens eine Befestigungseinrichtung in einem Bereich zwischen dem Bremszylinder und der Betätigungseinrichtung angeordnet ist, wobei die wenigstens eine Befestigungseinrichtung Befestigungsmittel aufweist, wobei die Befestigungsmittelöffnungen oder Befestigungsbolzen umfassen, deren Mittelachsen die Befestigungsebene BE aufspannen, wobei die Baugruppe über die Befestigungsmittel an einer Spritzwand eines Fahrzeugs befestigbar ist.

Die senkrecht zur Längsachse der Betätigungseinrichtung verlaufende Drehachse des Elektromotors kann die Längsachse der Betätigungseinrichtung schneiden oder versetzt dazu angeordnet sein. Beispielsweise kann die Drehachse des Elektromotors versetzt zur Längsachse der Betätigungseinrichtung angeordnet sein und sich in einer senkrecht zur Längsachse der Betätigungseinrichtung verlaufenden Ebene erstrecken.

Die Drehachse des Elektromotors kann senkrecht zur Befestigungsebene verlaufen. Der Elektromotor kann möglichst nah an der von ihm angetriebenen Betätigungseinrichtung angeordnet werden, wodurch ein kompakter und bauraumsparender Aufbau des elektromechanischen Bremskraftverstärkers erreicht wird. Die Anordnung der Antriebsanordnung des elektromechanischen Bremskraftverstärkers mit einem Winkel von 60° bis 120° relativ zur von der Befestigungseinrichtung definierten Befestigungsebene ermöglicht eine verbesserte Ausnutzung des im Fahrzeug vorhandenen Bauraums, der auch von den in einem Fahrzeug vorhandenen oder vorgegebenen Befestigungsstellen bestimmt wird. Die Antriebsanordnung kann dabei derart ausgerichtet und mit ihren Einheiten angeordnet werden, dass der in einem Fahrzeug bezüglich der vorgegebenen Befestigungsstellen vorhandene Bauraum bestmöglich ausgenutzt werden kann.

Unabhängig davon, ob der Bremskraftverstärker im Fahrzeug montiert ist, verläuft die Drehachse des Elektromotors in einem Winkel von 60 bis 120° zur von der wenigstens einen Befestigungseinrichtung definierten Befestigungsebene. Im Gegensatz dazu kann sich die Drehachse des Elektromotors in jedem denkbaren Winkel zur Hochachse des Fahrzeugs erstrecken. Die Drehachse des Elektromotors kann sich beispielsweise auch mit einem Winkel von 0° zur Hochachse des Fahrzeugs erstrecken und damit parallel zur Hochachse verlaufen. Die Drehachse des Elektromotors kann auch mit einem Winkel von 45 Grad bzw. 135 Grad zu der Hochachse des Fahrzeugs verlaufen, um weitere Beispiele zu nennen.

Die Befestigungsebene verläuft im Fahrzeug angebrachten Zustand des Bremskraftverstärkers mit einem vorbestimmten Winkel bzw. schräg zur Hochachse des Fahrzeugs.

In dieser Befestigungsebene kann die Längsachse der wenigstens einen Betätigungseinrichtung bzw. des Bremszylinders liegen.

Das Getriebe ist dabei dazu eingerichtet, dass die Rotationsbewegung der Ausgangswelle des Elektromotors in eine translatorische Bewegung der Betätigungseinrichtung umgewandelt wird. Durch die translatorische Bewegung der Betätigungseinrichtung in Richtung des Bremszylinders kann eine Bremskraft erzeugt werden.

Die Antriebsanordnung kann eine Steuereinheit aufweisen, die zum Ansteuern des wenigstens einen Elektromotors ausgebildet ist. Die wenigstens eine Steuereinheit kann eine Sensoranordnung aufweisen oder mit einer Sensoranordnung verbunden sein. Die Sensoranordnung kann beispielsweise dazu eingerichtet sein, die notwendige Verstärkung der auf das Bremspedal ausgeübten Bremskraft bestimmbar zu machen. Anhand der Messwerte der Sensoranordnung kann dann ermittelt werden, welche Verstärkungskraft insbesondere von dem Elektromotor über das Getriebe bereitgestellt werden muss. Die von der Sensoranordnung erfassten Messwerte liefern somit einen Indikator dafür, welche Verstärkungskraft von dem Elektromotor zusammen mit dem Getriebe erzeugt und auf die wenigstens eine Betätigungseinrichtung übertragen werden muss. Einzelne Sensoren der Sensoranordnung können in den Elektromotor und/oder die Steuereinheit integriert werden. Die von dem elektromechanischen Bremskraftverstärker bereitzustellende Verstärkungskraft kann von einem von der Sensoranordnung erfassten Bremswunsch des Fahrers oder von Befehlen eines Fahrdynamikregelprogramms abhängen. Der Bremswunsch kann durch die wenigstens eine Sensoranordnung erfasst werden und von der wenigstens einen Steuereinheit in entsprechende Antriebssignale für den Elektromotor umgewandelt werden. Der Bremswunsch kann beispielsweise durch Erfassen eines Bremspedalwegs und/oder einer auf das Bremspedal einwirkenden Pedalbetätigungskraft bestimmt werden. Ein oder mehrere Fahrdynamikregelungsprogramme, wie beispielsweise ein Antiblockiersystem (ABS), eine Antriebsschlupfregelung (ASR), ein elektronisches Stabilitätsprogramm (ESP) können in der Steuereinheit hinterlegt sein.

Die Betätigungseinrichtung kann wenigstens eine Betätigungseinheit bzw. wenigstens ein erstes Betätigungselement umfassen, das mit einer auf ein Bremspedal ausgeübten Pedalbetätigungskraft beaufschlagbar ist. Neben der Betätigungseinheit bzw. dem ersten Betätigungselement kann die Betätigungseinrichtung wenigstens ein weiteres Betätigungselement bzw. ein zweites Betätigungselement aufweisen, das von dem Elektromotor über das Getriebe angetrieben wird. Das wenigstens eine erste Betätigungselement kann zumindest abschnittsweise in dem zweiten Betätigungselement aufgenommen sein. Das erste Betätigungselement und das zweite Betätigungselement können zur Übertragung einer Bremskraft auf den Bremszylinder zusammenwirken. In diesem Fall kann es vorgesehen sein, dass zumindest ein Teil der von dem Bremspedal auf das erste Betätigungselement ausgeübten Bremskraft direkt auf den Bremszylinder übertragen wird. Basierend auf der erfassten, vom Fahrer über das Bremspedal angeforderten Bremskraft kann der Elektromotor von der Steuereinheit angesteuert werden. Der Elektromotor kann über das Getriebe das zweite Betätigungselement zur Erzeugung einer Verstärkungskraft in Richtung des Bremszylinders verlagern. Das erste Betätigungselement und das zweite Betätigungselement werden in Richtung des Bremszylinders verlagert, um über den Bremszylinder einen Bremsdruck an den Radbremsen zu erzeugen.

Je nach im Fahrzeug vorhandenem Bauraum können die Einheiten der Antriebsanordnung, wie Getriebe, Elektromotor oder auch die Steuereinheit an verschiedenen Seiten der Betätigungseinrichtung angeordnet sein. Dies ist gleichbedeutend mit einer Anordnung einzelner Einheiten an verschiedenen Seiten der Befestigungsebene, da die Längsachse der Betätigungseinrichtung in der Befestigungsebene liegt. Unabhängig von der Aufteilung der Einheiten der Antriebsanordnung auf beide Seiten der Betätigungseinrichtung bzw. der Befestigungsebene sind die Einheiten der Antriebsanordnung dennoch mit dem von der Drehachse des Elektromotors vorgegebenen Winkel relativ zur Hochachse des Fahrzeugs angeordnet. Es sind verschiedene Aufteilungen der Einheiten der Antriebsanordnung denkbar. Das Getriebe, der Elektromotor und die Steuereinheit können zusammen auf einer Seite der Befestigungsebene bzw. der Betätigungseinrichtung angeordnet werden. Alternativ können der Elektromotor und die Steuereinheit zusammen auf einer Seite der Betätigungseinrichtung angeordnet werden. In diesem Fall kann das Getriebe auf der anderen Seite der Betätigungseinrichtung angeordnet sein. Es ist ferner denkbar, das Getriebe und die Steuereinheit zusammen auf einer Seite der Betätigungseinrichtung und den Elektromotor auf der anderen Seite der Betätigungseinrichtung anzuordnen. Auch der Elektromotor und das Getriebe können zusammen auf einer Seite der Betätigungseinrichtung angeordnet werden, wohingegen die Steuereinheit auf der anderen Seite der Befestigungsebene angeordnet ist.

Die wenigstens eine Befestigungseinrichtung kann Befestigungsmittel aufweisen, die die Befestigungsebene definieren. Die Befestigungsmittel können Befestigungsöffnungen oder Befestigungsbolzen aufweisen, deren Mittelachsen die Befestigungsebene aufspannen. Die Befestigungseinrichtung kann von einem Flansch und den Befestigungsbolzen gebildet werden, die in Öffnungen in dem Flansch abschnittsweise aufgenommen werden. Die Befestigungsbolzen können über Muttern an dem Flansch gesichert werden. Die Befestigungsbolzen können sich parallel zur Längsachse der Betätigungseinrichtung erstrecken. In einem Fahrzeug sind Befestigungsstellen zur Anbringung der Baugruppe mit einem Bremskraftverstärker und einem Bremszylinder vorgesehen. Die Befestigungsbolzen der von dem elektromechanischen Bremskraftverstärker und dem Bremszylinder gebildeten Baugruppe können in Öffnungen an den vorgegebenen Befestigungsstellen an einer Spritzwand eingesteckt werden. Die Befestigungsbolzen können aus dem Fahrgastraum mit Muttern gekontert und auf diese Weise an der Spritzwand befestigt werden. Diese Befestigungsstellen werden zumeist von den Fahrzeugherstellern vorgegeben. Die Befestigungseinrichtung kann an dem wenigstens einen Bremszylinder angeordnet sein. Die Befestigungseinrichtung kann auch an dem elektromechanischen Bremskraftverstärker angeordnet sein. Die Befestigungseinrichtung kann beispielswiese mit Befestigungsbolzen am Fahrzeug verbunden und auf diese Weise am Fahrzeug angebracht werden.

Die wenigstens eine Betätigungseinrichtung kann wenigstens einen Zahnstangenabschnitt aufweisen. Der wenigstens eine Zahnstangenabschnitt kann an dem zweiten Betätigungselement vorgesehen sein, da primär das zweite Betätigungselement von dem Getriebe angetrieben werden soll. An der wenigstens einen Betätigungseinrichtung können ein erster Zahnstangenabschnitt und ein zweiter Zahnstangenabschnitt vorgesehen sein, die mit dem Getriebe koppelbar sind.

Das Getriebe kann wenigstens ein erstes Stirnrad und wenigstens ein zweiten Stirnrad aufweisen. Unter einem Stirnrad ist ein Zahnrad mit einer Verzahnung an seinem Außenumfang zu verstehen. Die Stirnräder können mit dem wenigstens einen Zahnstangenabschnitt gekoppelt sein. Dabei kann der erste Zahnstangenabschnitt mit dem ersten Stirnrad und der zweite Zahnstangenabschnitt mit dem zweiten Stirnrad gekoppelt sein. Jedes Stirnrad kann über eine Welle und ein daran angeordnetes Zahnrad mit einem der Zahnstangenabschnitte gekoppelt sein. Die beiden Zahnstangenabschnitte können an entgegengesetzten Seiten der Betätigungseinrichtung vorgesehen sein.

Das erste Stirnrad kann über ein Ritzel an der Ausgangswelle des Elektromotors direkt angetrieben werden. Ein von dem Ritzel des Elektromotors angetriebenes Zwischenzahnrad - im Folgenden "Zwischenrad" - kann zum Antreiben des zweiten Stirnrads vorgesehen sein. Das zweite Stirnrad wird somit nicht direkt von dem Elektromotor sondern über das Zwischenrad angetrieben. Das Zwischenrad kann ebenfalls in Form eines Stirnrades ausgebildet sein, d.h. das Zwischenrad kann eine Außenverzahnung aufweisen. Mit dem Zwischenrad wird erreicht, dass sich die Drehrichtung des zweiten Stirnrades umkehrt. Das erste Stirnrad und das zweite Stirnrad drehen sich somit gegensinnig. Das erste und das zweite Stirnrad können an entgegengesetzten Seiten der Betätigungseinrichtung zum Antreiben derselben angeordnet sein.

Ferner kann das Getriebe eine Zwischengetriebestufe aufweisen. Die Zwischengetriebestufe kann den Elektromotor mit dem ersten Stirnrad und dem zweiten Stirnrad drehmomentübertragend koppeln. Die Zwischengetriebestufe treibt das erste Stirnrad direkt und das zweite Stirnrad über das wenigstens eine Zwischenrad an.

Die Zwischengetriebestufe kann wenigstens ein erstes Zahnrad und wenigstens ein mit dem ersten Zahnrad koaxiales zweites Zahnrad aufweisen. Das erste Zahnrad und das zweite Zahnrad können in Form von Stirnrädern ausgebildet sein. Das erste Zahnrad und das zweite Zahnrad können drehfest miteinander verbunden sein. Das erste Zahnrad kann einen größeren Durchmesser als das zweite Zahnrad aufweisen. Da das zweite Zahnrad einen kleineren Durchmesser als das erste Zahnrad aufweisen kann, kann die Zwischengetriebestufe eine Untersetzung bereitstellen. Das erste Zahnrad und das zweite Zahnrad legen eine Drehachse der Zwischengetriebestufe fest. Die Drehachse der Zwischengetriebestufe kann sich senkrecht zur Längsachse der Betätigungseinrichtung erstrecken.

Das Getriebe kann ein von dem Elektromotor angetriebenes Eingangszahnrad aufweisen. Das Eingangszahnrad kann das erste Zahnrad der Zwischengetriebestufe antreiben. Das erste Zahnrad der Zwischengetriebestufe kann direkt bzw. unmittelbar in drehmomentübertragenden Eingriff mit dem Eingangszahnrad des Getriebes stehen. Das von dem Elektromotor erzeugte, das Eingangszahnrad antreibende Drehmoment kann unmittelbar von dem Eingangszahnrad auf das erste Zahnrad der Zwischengetriebestufe übertragen werden.

Das zweite Zahnrad kann das erste Stirnrad direkt und das zweite Stirnrad über das wenigstens eine Zwischenrad antreiben. Das zweite Zahnrad kann sowohl mit dem ersten Stirnrad als auch mit dem Zwischenrad unmittelbar in drehmomentübertragenden Eingriff stehen. Das von dem zweiten Zahnrad angetriebene Zwischenrad kann mit dem zweiten Stirnrad in drehmomentübertragenden Eingriff stehen. Das Zwischenrad treibt das zweite Stirnrad gegensinnig zu Drehrichtung des ersten Stirnrads an.

Die Zwischengetriebeeinheit kann als Stirnradgetriebe ausgebildet sein. Das erste Zahnrad und das wenigstens eine koaxial zu dem ersten Zahnrad angeordnete zweite Zahnrad der Zwischengetriebeeinheit können in Form eines Doppelzahnrades ausgebildet sein. Dieses Doppelzahnrad kann die Drehachse der Zwischengetriebeeinheit festlegen.

Das erste Zahnrad der Zwischengetriebestufe kann in Richtung der Drehachse des Elektromotors versetzt zu dem zweiten Zahnrad der Zwischengetriebestufe, dem ersten Stirnrad und dem zweiten Stirnrad angeordnet sein. Das Eingangszahnrad und das erste Zahnrad der Zwischengetriebestufe können in Richtung der Drehachse des Elektromotors in einer ersten Ebene angeordnet sein. Das zweite Zahnrad, das erste Stirnrad, das Zwischenrad und das zweite Stirnrad können in Richtung der Drehachse des Elektromotors in einer zweiten Ebene angeordnet sein. Die erste Ebene und die zweite Ebene können in Richtung der Drehachse des Elektromotors versetzt zueinander angeordnet sein. Über die Zwischengetriebestufe mit ihren beiden Zahnrädern kann eine drehmomentübertragende Verbindung zwischen der ersten Ebene und der zweiten Ebene hergestellt werden.

Der Bremskraftverstärker kann eine Kupplung aufweisen. Die Kupplung kann zwischen dem Elektromotor und dem Getriebe vorgesehen sein. Die Kupplung kann die Ausgangswelle des Elektromotors mit einer Eingangswelle des Getriebes koppeln. Mit der Kupplung können Überlastschäden aufgrund eines zu hohen Drehmoments an dem Elektromotor und/oder dem Getriebe verhindert werden. Hohe Drehmomente können beispielsweise auftreten, wenn der Elektromotor das Getriebe anzutreiben beginnt, oder wenn der Motor den Antrieb des Getriebes beendet. Die Kupplung kann in Form einer Klauenkupplung ausgeführt sein. Der Ausgangswelle des Motors und der Eingangswelle des Getriebes kann jeweils ein Kupplungsteil der Kupplung zugeordnet sein. Die Kupplungsteile können in Richtung der Drehachse des Elektromotors vorstehende Vorsprünge aufweisen, die miteinander zur Drehmomentübertragung in Eingriff bringbar sind. Die Kupplung kann ferner ein Zwischenstück aufweisen, das zwischen den beiden Kupplungsteilen angeordnet ist. Das Zwischenstück kann im Wesentlichen sternförmig ausgebildet sein. Das Zwischenstück kann eine Vielzahl an Armen aufweisen, die sich von einem zentralen Bereich des Zwischenstücks weg erstrecken. Das Zwischenstück kann derart ausgebildet sein, dass sich zwischen den Vorsprüngen der beiden Kupplungsteile jeweils ein Arm des Zwischenstücks befindet. Das Zwischenstück kann aus einem elastischen bzw. nachgiebigen Material hergestellt sein. An der Eingangswelle des Getriebes kann das von dem Elektromotor angetriebene Eingangszahnrad an der Eingangswelle des Getriebes vorgesehen sein. Durch die Kupplung kann die Montage bzw. Demontage des Elektromotors von dem Bremskraftverstärker bzw. der Betätigungseinrichtung vereinfacht werden. Der Elektromotor bildet mit dem ihm zugeordneten Gehäuseteil ein Modul, das mittels der Kupplung schnell und einfach vom Getriebe gelöst und mit diesem verbunden werden kann.

Der elektromechanische Bremskraftverstärker kann ein mehrteiliges Gehäuse aufweisen. Dem Getriebe kann zumindest ein Gehäuseteil zugeordnet sein. Weitere Gehäuseteile können beispielsweise der Betätigungseinrichtung und dem Elektromotor zugeordnet sein. Die Eingangswelle des Getriebes kann an dem dem Getriebe zugeordneten Gehäuseteil gelagert sein. An dem Gehäuseteil kann eine entsprechende Lagerstelle für die Eingangswelle ausgebildet sein. Die Eingangswelle kann über ein Lagerelement an der Lagerstelle des Gehäuseteils gelagert sein. Ferner kann die Zwischengetriebestufe an dem Gehäuseteil gelagert sein. Die Zwischengetriebestufe kann einen Wellenabschnitt aufweisen, an dem ein Lagerelement angeordnet sein kann. Der Wellenabschnitt kann sich entlang der Drehachse der Zwischengetriebestufe erstrecken. An dem Gehäuseteil kann eine Lagerstelle für das Lagerelement der Zwischengetriebestufe ausgebildet sein. Als Lagerelemente können Wälzlager verwendet werden. Beispielsweise können Kugellager oder Nadellager zur Lagerung der Eingangswelle und/oder der Zwischengetriebestufe verwendet werden.

Ein weiterer Aspekt ist eine elektrohydraulische Kraftfahrzeugbremsanlage mit einem elektromechanischen Bremskraftverstärker der voranstehend beschriebenen Art.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Figur 1: eine perspektivische Ansicht eines elektromechanischen Bremskraftverstärkers gemäß eines Ausführungsbeispiels;
- Fign. 2-7: Ansichten verschiedener Ausführungsbeispiele des elektromechanischen Bremskraftverstärkers mit sich unterscheidender Anordnung von Getriebe, Elektromotor und Steuereinheit;
- Fign. 8-11: Ansichten eines elektromechanischen Bremskraftverstärkers mit einem Getriebe gemäß einer ersten Ausführungsvariante;
- Fign. 12-16: Ansichten eines elektromechanischen Bremskraftverstärkers mit einem Getriebe gemäß einer zweiten Ausführungsvariante;
- Fign. 17-21: perspektivische Ansichten eines elektromechanischen Bremskraftverstärkers mit einem Getriebe gemäß einer dritten Ausführungsvariante;
- Fign. 22 und 23: perspektivische Ansichten eines Getriebes des elektromechanischen Bremskraftverstärkers; und
- Fign. 24 und 25: perspektivische Ansichten des elektromechanischen Bremskraftverstärkers gemäß der Figuren 17 bis 21 mit dem Elektromotor im angebrachten und im abgenommenen Zustand.

### Detaillierte Beschreibung

Es ist darauf hinzuweisen, dass in den nachfolgend beschriebenen Figuren die Verzahnung der einzelnen Zahnräder, Zahnstangen, usw. teilweise nur schematisch dargestellt ist. Es versteht sich, dass in jedem Fall eine geeignete Verzahnung, die beispielsweise auch als Schrägverzahnung ausgebildet sein kann, vorhanden ist, um ein Kämmen der einzelnen Getriebe-Elemente untereinander zu ermöglichen.

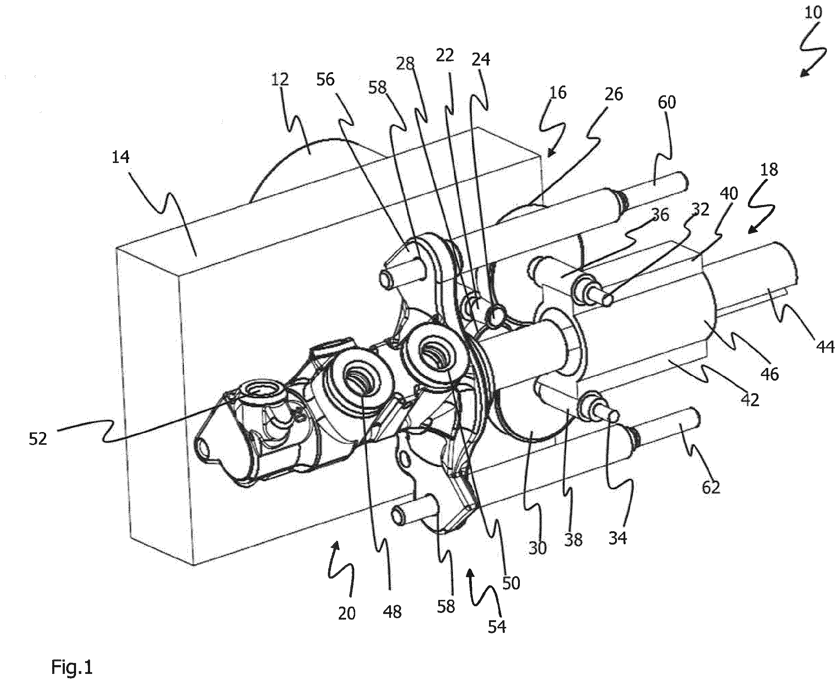

Figur 1 zeigt eine perspektivische Ansicht eines elektromechanischen Bremskraftverstärkers, der allgemein mit 10 bezeichnet ist.

Der elektromechanische Bremskraftverstärker 10 umfasst einen Motor 12, eine Steuereinheit 14, ein Getriebe 16 und eine Betätigungseinrichtung 18. Die Betätigungseinrichtung 18 ist mit einem Bremszylinder 20 gekoppelt. Der elektromechanische Bremskraftverstärkter 10 und der Bremszylinder 20 bilden eine Baugruppe.

An einer Ausgangswelle 22 des Elektromotors 12 ist ein Ritzel 24 vorgesehen. Das Ritzel 24 treibt ein erstes Stirnrad 26 und ein Zwischenrad 28 direkt bzw. unmittelbar an. Über das Zwischenrad 28 wird ein zweites Stirnrad 30 angetrieben.

Die Stirnräder 26 und 30 treiben jeweils eine Welle 32, 34 an. An den Wellen 32 und 34 ist jeweils ein Zahnrad bzw. eine Zahnrolle 36, 38 vorgesehen. Die Zahnräder 36 und 38 stehen jeweils mit einem Zahnstangenabschnitt 40, 42 an der Betätigungseinrichtung 18 in Eingriff. Die Zahnstangenabschnitte 40, 42 sind an entgegengesetzten Seiten der Betätigungseinrichtung 18 angeordnet. Die jeweilige Zahnung dieser Getriebe-Elemente 24, 26, 28, 30, 36, 38, 40, 42 ist nur schematisch dargestellt.

Die Betätigungseinrichtung 18 weist ein erstes Betätigungselement 44 und ein zweites Betätigungselement 46 auf. An dem zweiten Betätigungselement 46 sind die Zahnstangenabschnitte 40, 42 vorgesehen, die mit den Zahnrädern 36, 38 in Eingriff stehen. Das erste Betätigungselement 44 kann mit einer von einem Fahrer des Fahrzeugs auf ein Bremspedal ausgeübten Bremskraft beaufschlagt werden. Dadurch wird das erste Betätigungselement 44 in Richtung des Bremszylinders 20 bewegt. Die vom Fahrer angeforderte Verstärkungskraft wird von der Betätigungseinrichtung 18 erzeugt, die von dem Elektromotor 12 über das Getriebe 16 angetrieben wird.

Dazu wird das zweite Betätigungselement 46 von dem Elektromotor 20 über das Getriebe 16 und insbesondere über die Zahnräder 36, 38 und die Zahnstangenabschnitte 40, 42 in Richtung des Bremszylinders 20 bewegt, um die vom Fahrer angeforderte Verstärkungskraft zusätzlich in den Bremszylinder 20 zu leiten. Durch die Bewegung der Betätigungseinrichtung 18 mit ihren Betätigungselementen 44, 46 in Richtung des Bremszylinders 20 wird in dem Bremszylinder 20 ein Hydraulikdruck erzeugt, der dem von dem Fahrer angeforderten Bremsdruck entspricht. Der Bremszylinder 20 weist zwei Öffnungen 48, 50 auf, über die die Bremskreise des Fahrzeugs mit Hydraulikfluid und damit mit Hydraulikdruck zur Erzeugung einer Bremskraft an den Radbremsen beaufschlagt werden können. An der weiteren Öffnung 52 des Bremszylinders 20 kann ein Behälter zur Aufnahme von Bremsflüssigkeit bzw. ein Druckausgleichbehälter angeordnet werden.

In einem Bereich zwischen dem Bremszylinder 20 und der Betätigungseinrichtung 18 ist eine Befestigungseinrichtung 54 vorgesehen, die einen Flansch 56 und Öffnungen 58 aufweist. Die Öffnungen 58 sind zur Aufnahme der Befestigungsbolzen 60, 62 ausgebildet. Die Befestigungsbolzen 60, 62 können in einer vorbestimmten Befestigungsposition an dem Fahrzeug beispielsweise an einer Spritzwand (nicht gezeigt) in Öffnungen eingesteckt und befestigt werden. Die Position der Befestigungsöffnungen 60, 62 wird zumeist von den Fahrzeugherstellern vorgegeben.

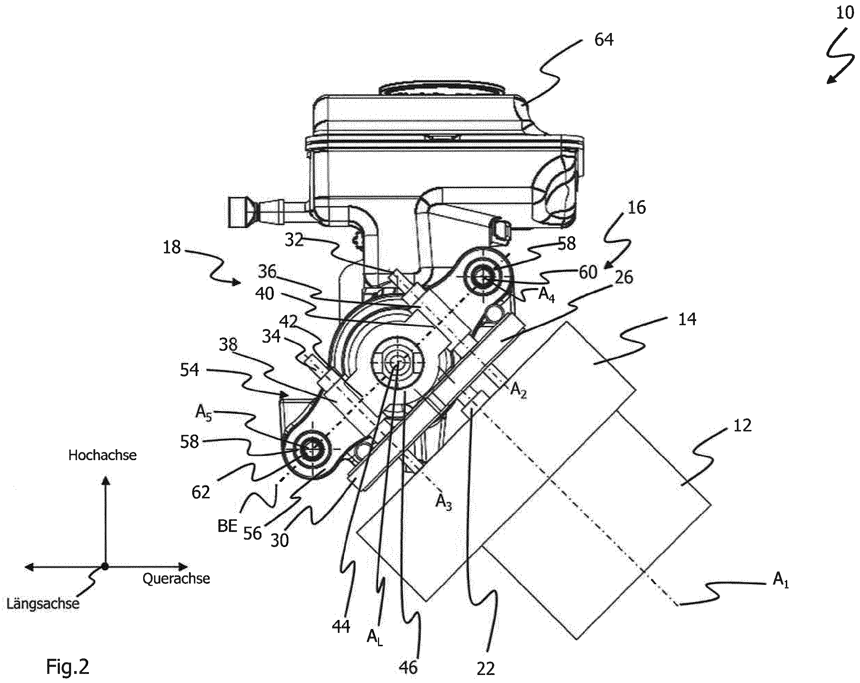

Figur 2 zeigt eine Vorderansicht des in Figur 1 gezeigten elektromechanischen Bremskraftverstärkers 10. In Figur 2 sind die Hochachse, die Längsachse und die Querachse des Fahrzeugs angegeben. Die Hochachse des Fahrzeugs ist eine Achse, die sich im Wesentlichen in vertikaler Richtung erstreckt. Die Längsachse A_{L} der Betätigungseinrichtung 18 verläuft parallel zur die Längsachse des Fahrzeugs.

Die Steuereinheit 14 ist zwischen dem Motor 12 und dem Getriebe 16 angeordnet. Der Elektromotor 12 treibt das Getriebe 16 an, über das die beiden Zahnräder 36 und 38 angetrieben werden, um über die Zahnstangenabschnitte 40, 42 die Betätigungseinrichtung 18 in Richtung der Längsachse A_{L} zu verlagern. Durch die Verlagerung der Betätigungseinrichtung 18 entlang der Längsachse A_{L} wird der Bremszylinder 20 betätigt, von dem in Figur 2 nur ein Behälter 64 für die Bremsflüssigkeit erkennbar ist.

Die Antriebsanordnung aus Motor 12, Steuereinheit 14 und Getriebe 16 ist mit einem vorbestimmten Winkel relativ zur Hochachse des Fahrzeugs angeordnet. Der Winkel wird von der Drehachse A₁ des Elektromotors 12 vorgeben, die mit einem vorbestimmten Winkel zur Hochachse des Fahrzeugs verläuft. Dieser Winkel kann 45° betragen. Ebenso wie die Drehachse A₁ des Elektromotors 14 verlaufen die Drehachsen A₂ und A₃ der Stirnräder 26, 30, der Wellen 32, 34 und der Zahnräder 36 und 38 mit einem vorbestimmten Winkel schräg zur Hochachse des Fahrzeugs.

Der elektromechanische Bremskraftverstärker 10 weist eine Befestigungseinrichtung 54 auf. Die Befestigungseinrichtung 54 umfasst einen Flansch 56 mit Öffnungen 58 und Befestigungsbolzen 60, 62. Die Befestigungsbolzen 60, 62 sind fest mit der Baugruppe bzw. dem Flansch 56 am Bremszylinder 20 verbunden. Die Befestigungsbolzen 60, 62 spannen eine Befestigungsebene BE auf. Die Befestigungsebene BE erstreckt sich durch die Mittelachsen A₄ und A₅ der Befestigungsbolzen 60, 62. Die Befestigungsebene BE verläuft schräg bzw. mit einem vorbestimmten Winkel zur Fahrzeughochachse. Die Längsachse A_{L} der Betätigungseinrichtung 18 liegt in der Befestigungsebene BE. Die Drehachse A₁ des Elektromotors 12 verläuft senkrecht zur Längsachse A_{L} der Betätigungseinrichtung 18 und des Bremszylinders 20. Die Drehachse A₁ des Elektromotors 12 verläuft senkrecht zur Befestigungsebene BE. Gleiches gilt für die Drehachsen A₂ und A₃ der Stirnräder 26, 30 und der mit den Stirnrädern 26, 30 verbundenen Komponenten. Die Drehachse A₁ muss nicht senkrecht zur Befestigungsebene verlaufen, sondern kann sich auch mit einem Winkel von 60 bis 120 ° zur Befestigungsebene erstrecken.

Bei dem in Figur 2 gezeigten Ausführungsbeispiel des elektromechanischen Bremskraftverstärkers 10 sind der Elektromotor 12, die Steuereinheit 14 und das Getriebe 16 zusammen an einer Seite der Betätigungseinrichtung 18 bzw. der Befestigungsebene BE angeordnet. Dadurch kann ein besonders kompakter Aufbau der Antriebsanordnung des Bremskraftverstärkers 10 erreicht werden.

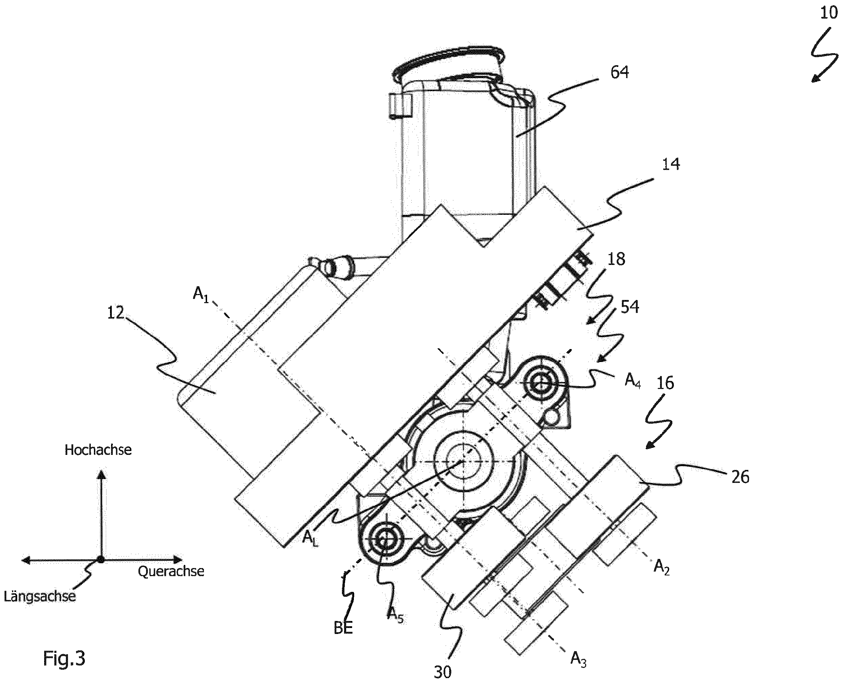

In den Figuren 3 bis 7 sind weitere Ausführungsbeispiele des elektromechanischen Bremskraftverstärkers 10 gezeigt, die sich im Wesentlichen durch die Anordnung des Motors 12, der Steuereinheit 14 und des Getriebes 16 unterscheiden. Unabhängig von der Anordnung der Antriebsanordnung mit dem Elektromotor 12, der Steuereinheit 14 und dem Getriebe 16 an der Betätigungseinrichtung 18, ist die Antriebsanordnung mit dem von der Drehachse A₁ des Elektromotors 12 vorgegebenen Winkel zur Hochachse des Fahrzeugs angeordnet. Die Drehachse A₁ des Elektromotors 12 verläuft zudem bei allen Ausführungsbeispielen senkrecht zur Befestigungsebene BE und auch senkrecht zur Längsachse A_{L} der Betätigungseinrichtung 18.

Figur 3 zeigt eine Vorderansicht eines weiteren Ausführungsbeispiels des elektromechanischen Bremskraftverstärkers 10, bei dem der Elektromotor 12 und die Steuereinheit 14 zusammen auf einer Seite der Betätigungseinrichtung 18 und das Getriebe 14 auf der anderen Seite der Betätigungseinrichtung 18 angeordnet ist. Auch bei diesem Ausführungsbeispiel verläuft die Drehachse A₁ des Elektromotors 12 schräg zur Hochachse des Fahrzeugs und senkrecht zur Befestigungsebene BE. Die Drehachsen A₂ und A₃ der Stirnräder 26 und 30 verlaufen schräg bzw. mit einem vorbestimmten Winkel zur Hochachse des Fahrzeugs, aber ebenfalls senkrecht zur Befestigungsebene BE. Die Drehachse A₁ des Elektromotors verläuft senkrecht zur Längsachse A_{L} der Betätigungseinrichtung 18.

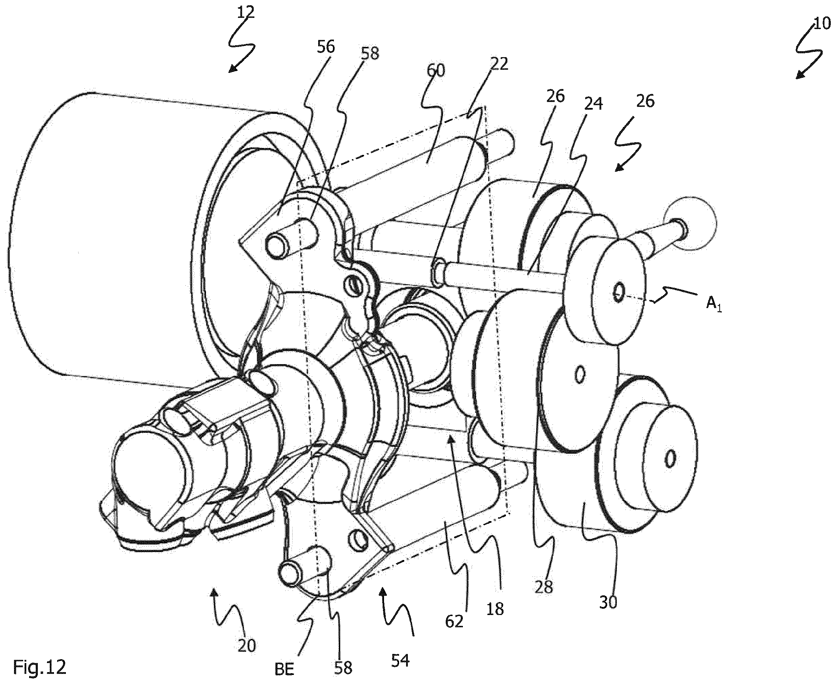

Das Getriebe 16 gemäß dieses Ausführungsbeispiels unterscheidet sich vom Aufbau her von dem voranstehend beschriebenen Getriebe 16. Auf diese Variante des Getriebes 16 wird im weiteren Verlauf dieser Beschreibung mit Bezug auf die Figuren 12 bis 16 im Detail eingegangen. Die Betätigungseinrichtung 18 entspricht der mit Bezug auf die Fign. 1 und 2 im Detail beschriebenen Betätigungsvorrichtung. Festzuhalten ist jedoch bereits hier, dass sich die Motorausgangswelle 22 von der Seite der Betätigungseinrichtung 18, an der der Motor 12 angeordnet ist, zur anderen Seite mit dem Getriebe 16 erstreckt, um ein von dem Motor 12 erzeugtes Drehmoment auf das Getriebe 16 übertragen zu können.

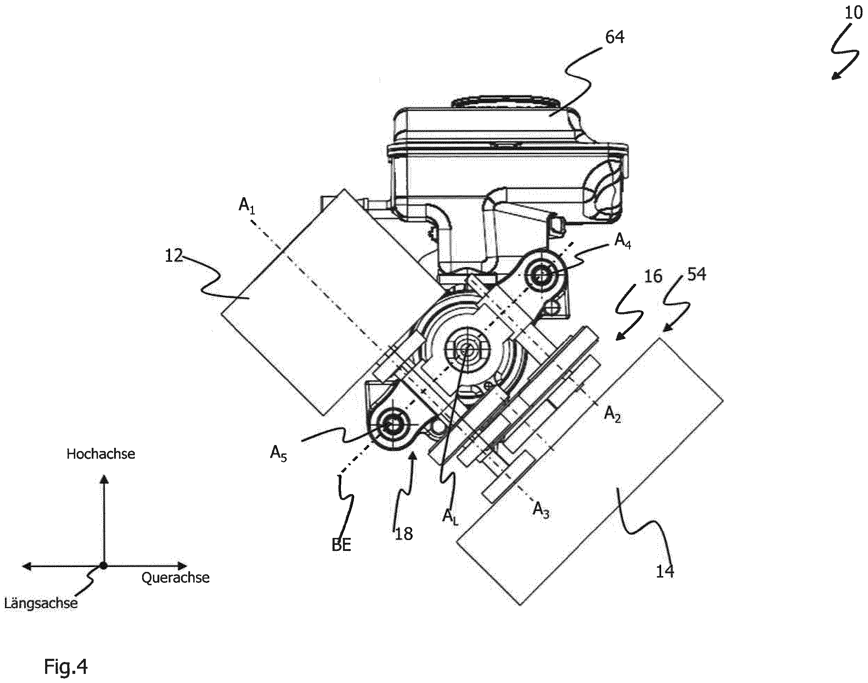

Figur 4 zeigt eine Vorderansicht eines weiteren Ausführungsbeispiels des Bremskraftverstärkers 10. Bei diesem Ausführungsbeispiel ist der Elektromotor 12 auf einer Seite der Betätigungseinrichtung 18 bzw. auf einer Seite der Befestigungsebene BE angeordnet. Das Getriebe 16 ist zusammen mit der Steuereinheit 14 auf der dem Motor 12 abgewandten Seite der Betätigungseinrichtung 18 und auf der jeweils anderen Seite der Befestigungsebene BE angeordnet. Die Drehachsen A₁, A₂ und A₃ verlaufen schräg bzw. mit einem vorbestimmten Winkel zur Hochachse des Fahrzeugs und senkrecht zur Befestigungsebene BE. Die Drehachse A₁ des Elektromotors verläuft senkrecht zur Längsachse A_{L} der Betätigungseinrichtung 18.

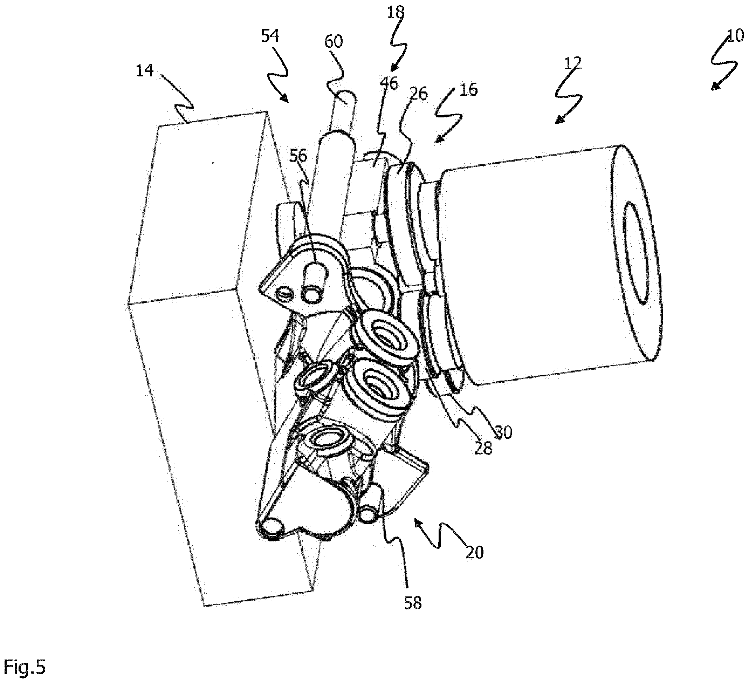

Figur 5 zeigt eine perspektivische Ansicht eines weiteren Ausführungsbeispiels des Bremskraftverstärkers 10. Bei diesem Ausführungsbeispiel des Bremskraftverstärkers 10 ist der Motor 12 zusammen mit dem Getriebe 16 auf einer Seite der Betätigungseinrichtung 18 bzw. des Bremszylinders 20 vorgesehen. Auch der dem Getriebe 16 abgewandten Seite der Betätigungseinrichtung 18 bzw. des Bremszylinders 20 ist die Steuereinheit 14 vorgesehen. Auch bei diesem Ausführungsbeispiel erstreckt sich die Motorausgangswelle 22 von der Seite mit dem Motor 12 Bis zur Seite mit dem Getriebe 16. Dabei durchdringt die Motorausgangswelle 22 die Befestigungsebene BE.

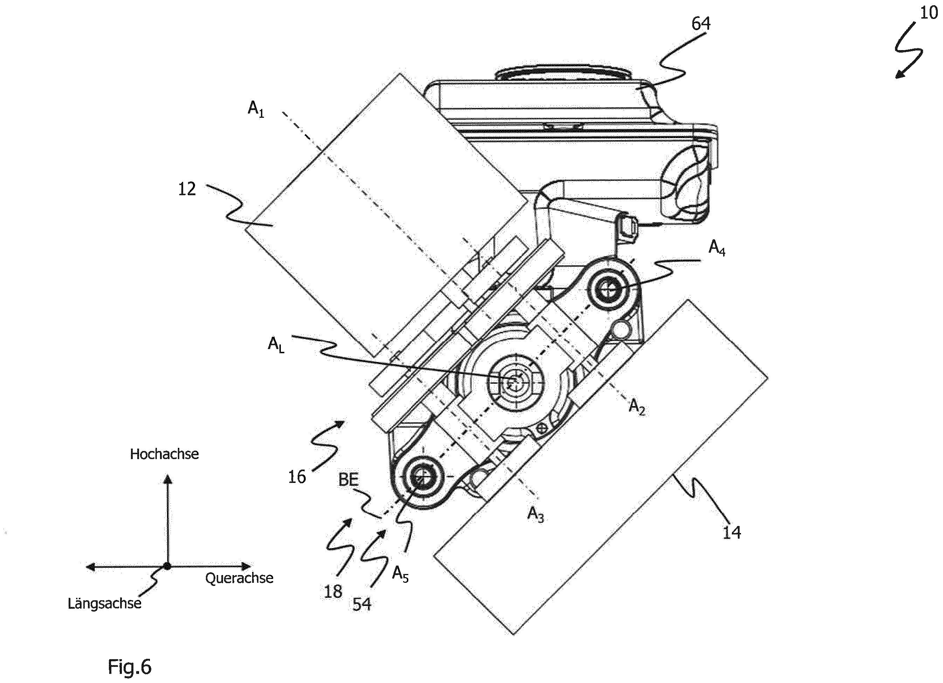

Figur 6 zeigt eine Vorderansicht des elektromechanischen Bremskraftverstärkers 10 gemäß Figur 5. Der Elektromotor 12 und das Getriebe 16 sind auf einer Seite der Betätigungseinrichtung 18 bzw. der Befestigungsebene BE angeordnet. Die Steuereinheit 14 ist auf der jeweils anderen Seite der Betätigungseinrichtung 18 bzw. der Befestigungsebene BE angeordnet. Die Drehachsen A₁, A₂ und A₃ verlaufen schräg zur Hochachse des Fahrzeugs, aber senkrecht zur Befestigungsebene BE.

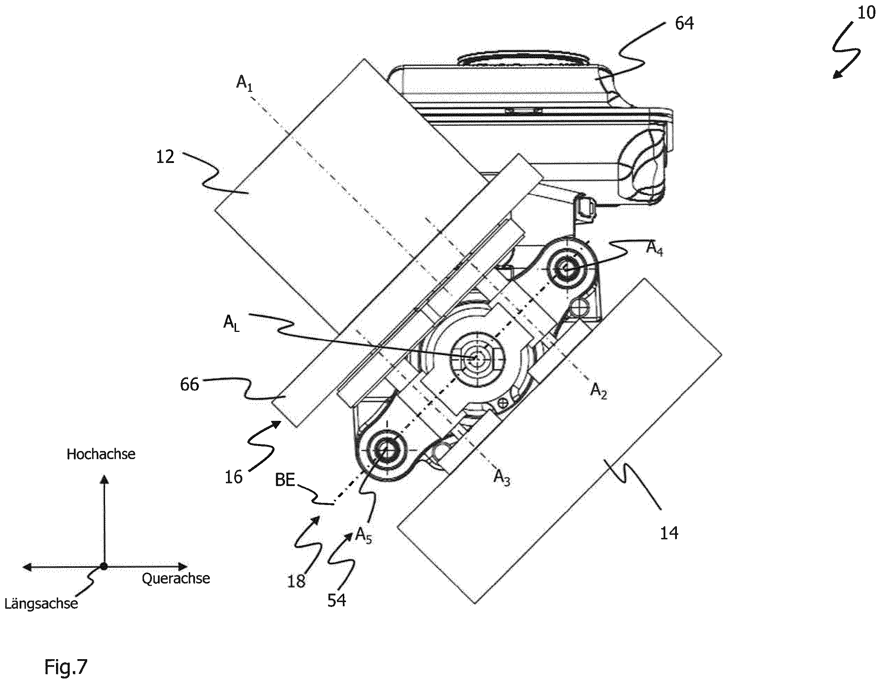

Die Ansicht gemäß Figur 7 entspricht weitestgehend der Ansicht gemäß Figur 6. Teile des Getriebes 16 und der Motorausgangswelle 22 werden durch ein Getriebegehäuse 66 zur Aufnahme von Lagerkräften der Drehachsen A₂, A₃, A₆ bzw. Drehwellen verdeckt.

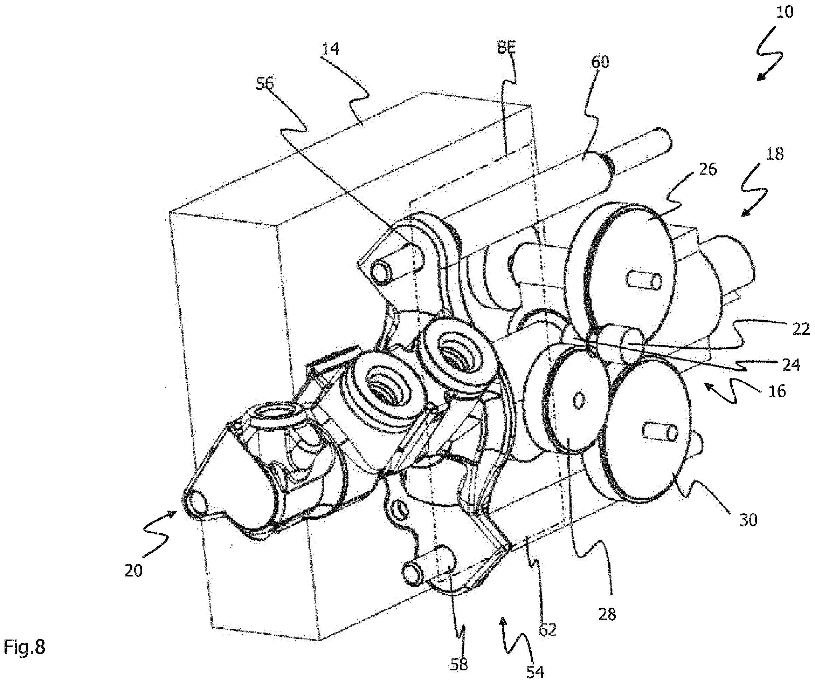

Figur 8 zeigt eine perspektivische Ansicht des elektromechanischen Bremskraftverstärkers 10 mit einem Getriebe 16 gemäß einer ersten Ausführungsvariante. Das Getriebe 16 weist ein erstes Stirnrad 26 und ein zweites Stirnrad 30 auf. Das erste Stirnrad 26 wird direkt von der Motorwelle 22 über ein in Figur 8 nur schematisch erkennbares Ritzel 24 angetrieben, das an der Motorausgangswelle 22 angeordnet ist. Über das Ritzel 24 wird auch ein Zwischenzahnrad 28 direkt angetrieben. Das Zwischenzahnrad 28 wiederum treibt das zweite Stirnrad 30 an. Durch das Zwischenrad 28 wird erreicht, dass sich die Drehrichtung des zweiten Stirnrads 30 verglichen mit der Drehrichtung des ersten Stirnrads 26 umkehrt, sodass sich die Stirnräder 26 und 30 gegensinnig drehen. Die entgegengesetzten Drehrichtungen des ersten Stirnrades und des zweiten Stirnrades werden benötigt, um die Betätigungseinrichtung 18 mit beiden Stirnrädern 26 und 30 antreiben zu können.

Das erste Stirnrad 26, das Zwischenrad 28, das zweite Stirnrad 30 und das Ritzel 24 an der Motorausgangswelle 22 sind in Richtung der Drehachse A₁ des Elektromotors 12 in einer Ebene angeordnet.

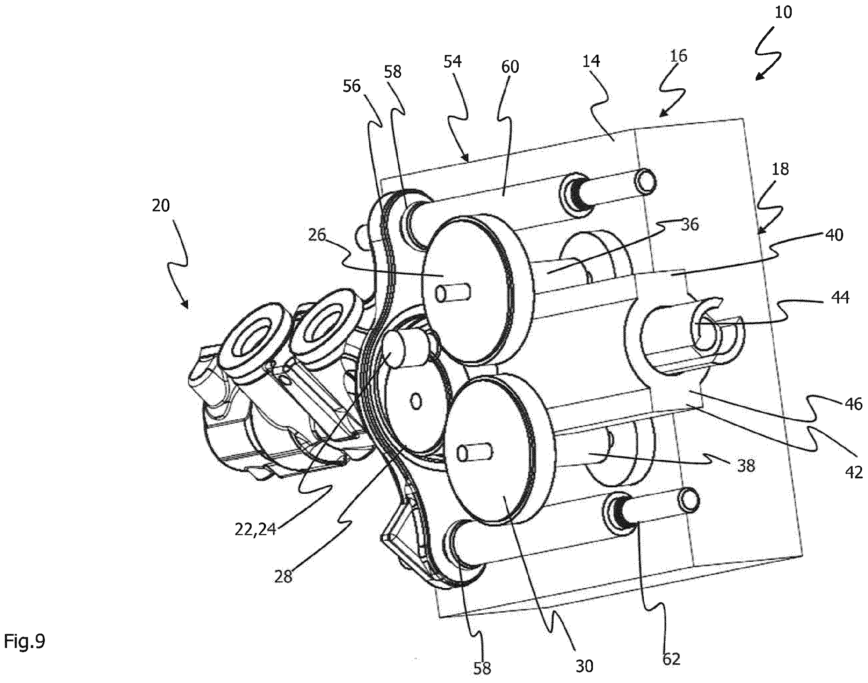

Figur 9 zeigt eine weitere perspektivische Ansicht des in Figur 8 gezeigten Bremskraftverstärkers 10. Die Betätigungseinrichtung 18 setzt sich aus einem ersten Betätigungselement 44 und einem zweiten Betätigungselement 46 zusammen. Das zweite Betätigungselement 46 kann von dem Getriebe 16 angetrieben werden. Dazu weist das zweite Betätigungselement 46 die Zahnstangenabschnitte 40 und 42 auf, in die Zahnräder 36 und 38 eingreifen. Die Zahnräder 36 und 38 sind mit dem ersten Stirnrad 26 und dem zweiten Stirnrad 30 verbunden und werden von den Stirnrädern 26, 30 angetrieben. Das erste Stirnrad 26 wird unmittelbar von dem Ritzel 24 an der Motorausgangswelle 22 angetrieben. Das Ritzel 24 an der Motorausgangswelle 22 treibt das Zwischenrad 28 an, das wiederum das zweite Stirnrad 30 antreibt. Wird ein vom Fahrer auf ein Bremspedal (nicht gezeigt) ausgeübte Bremskraft auf das erste Betätigungselement 44 übertragen, wird das Betätigungselement 44 in Richtung des Bremszylinders 20 bewegt. Die Steuereinheit 14 steuert basierend auf der vom Fahrer auf das Bremspedal ausgeübten Bremskraft den Motor 12 an. Der Motor 12 treibt das Getriebe 16 an, um das zweite Betätigungselement 46 entlang der Längsachse A_{L} der Betätigungseinrichtung 18 in Richtung des Bremszylinders 20 zu verlagern. Durch die Verlagerung der Betätigungseinrichtung 18 in Richtung des Bremszylinders 20 wird eine Verstärkung der Bremskraft erreicht und über den Bremszylinder 20 eine Bremsdruck an den Radbremsen (nicht gezeigt) erzeugt.

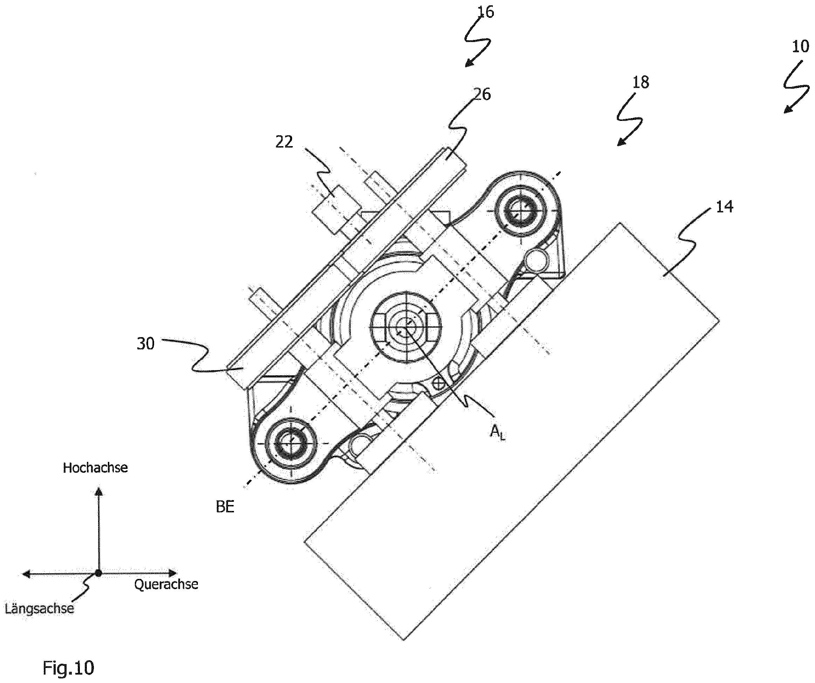

Figur 10 zeigt eine Vorderansicht des in den Fign. 8 und 9 gezeigten Bremskraftverstärkers 10. In Figur 10 ist insbesondere erkennbar, dass sämtliche Zahnräder des Getriebes 16 in einer Flucht bzw. in einer Ebene liegen, d.h. die Stirnräder 26, 30, das Zwischenrad 28 und das Ritzel 24 sind nicht in Richtung der Drehachse A₁ des Motors zueinander versetzt.

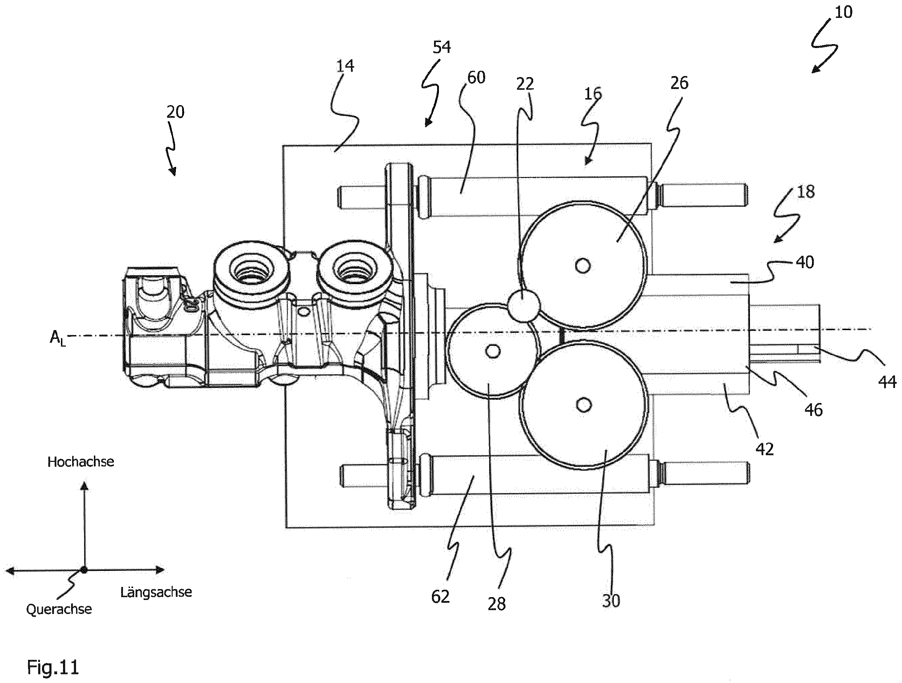

Figur 11 zeigt eine Seitenansicht des in den Fign. 8 bis 10 gezeigten elektromechanischen Bremskraftverstärkers 10. Der Zahnstangenabschnitt 40 ist in Figurll oberhalb der Längsachse A_{L} der Betätigungseinrichtung 18 an dem zweiten Betätigungselement 46 angeordnet. Der Zahnstangenabschnitt 42 ist unterhalb der Längsachse A_{L} an dem zweiten Betätigungselement 46 vorgesehen. Um die Betätigungseinrichtung 18 in Richtung des Bremszylinders 20 verlagern zu können, treibt die erste Stirnscheibe 26 den oberen Zahnstangenabschnitt 40 und die zweite Stirnscheibe 30 den unteren Zahnstangenabschnitt 42 an. Die Betätigungseinrichtung 18 ist mit dem Bremszylinder 20 verbunden, der sich in Richtung der Längsachse A_{L} an die Betätigungseinrichtung 18 anschließt.

In Figur 11 wird ferner deutlich, dass das erste Stirnrad 26 direkt von der Motorausgangswelle 22 angetrieben wird, wohingegen das Zwischenrad 28 zwischen dem Ritzel 24 und dem zweiten Stirnrad 30 angeordnet ist. Die Drehmomentübertragung erfolgt von dem Ritzel 24 über das Zwischenrad 28 auf das zweite Stirnrad 30.

Die Befestigungseinrichtung 54 ist zwischen dem Bremszylinder 20 und der Betätigungseinrichtung 18 vorgesehen. Die Befestigungseinrichtung 54 weist die Befestigungsbolzen 60, 62 auf, die sich in Richtung der Längsachse des Fahrzeugs erstrecken und die Befestigungsebene BE aufspannen.

Figur 12 zeigt eine perspektivische Ansicht des elektromechanischen Bremskraftverstärkers 10 mit einem Getriebe 16 gemäß einer zweiten Ausführungsvariante. In Figur 12 ist erkennbar, dass das erste Stirnrad 26 und das zweite Stirnrad 30 in unterschiedlichen Ebenen liegen. Auch das Zwischenrad 28 und das erste Stirnrad 26 sind in Richtung der Motorausgangswelle 22 bzw. der Drehachse A₁ des Elektromotors 12 zueinander versetzt angeordnet sind.

An der Motorausgangswelle 22 ist ein Ritzel 24 vorgesehen, dass das erste Stirnrad 26 und das Zwischenrad 28 antreiben kann, obwohl das erste Stirnrad 26 und das Zwischenrad 28 in Richtung der Drehachse A₁ versetzt zueinander angeordnet sind. Das Ritzel 24 ist dementsprechend derart ausgebildet und dimensioniert, dass es die Erstreckung der Außenumfangsflächen des ersten Stirnrads 26 und des Zwischenrads 28 in Richtung der Drehachse A₁ des Elektromotors 12 überspannt und somit sowohl das erste Stirnrad 26 als auch das Zwischenrad 28 antreiben kann. Die Motorausgangswelle 22 erstreckt sich von dem Motor 12 zu dem Getriebe 16, das auf der anderen Seite der Betätigungseinrichtung 18 angeordnet ist. Die Motorausgangswelle 22 durchdringt dabei die Befestigungsebene BE.

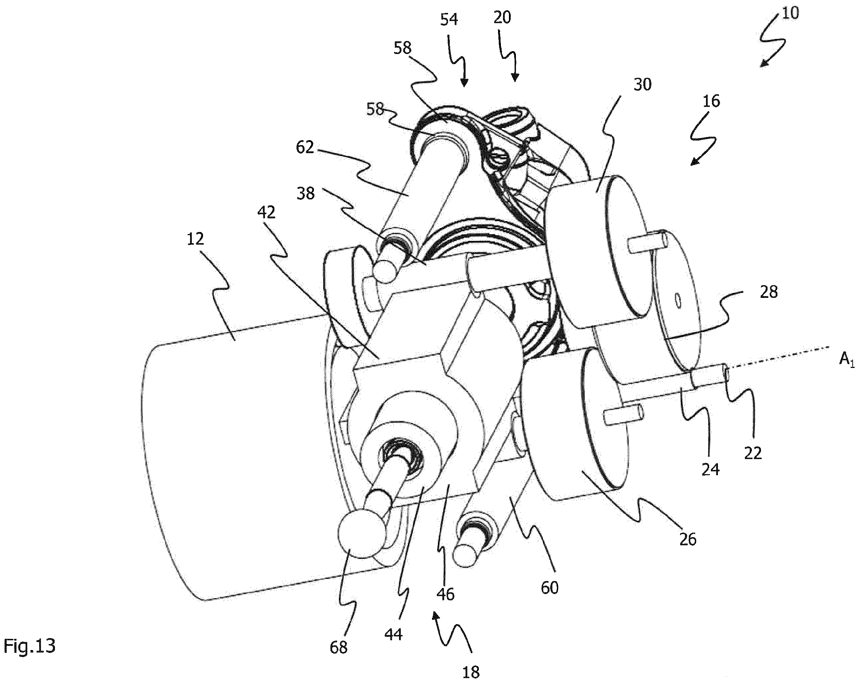

Figur 13 zeigt eine weitere perspektivische Ansicht des in Figur 12 gezeigten elektromechanischen Bremskraftverstärkers 10. Die Betätigungseinrichtung 18 ist mit einem Kraftübertragungsglied 68 verbunden, dass eine auf ein Bremspedal ausgeübte Bremskraft auf die Betätigungseinrichtung 18 überträgt. Das Kraftübertragungsglied 68 ist mit dem ersten Betätigungselement 44 gekoppelt.

Die Motorausgangswelle 22 bzw. das Ritzel 24 an der Motorausgangswelle 22 treibt das erste Stirnrad 26 und das Zwischenrad 28 direkt und unmittelbar an. Das Zwischenrad 28 treibt das zweite Stirnrad 30 an. Über das Zwischenrad 28 kann die Drehrichtung des zweiten Stirnrads 30 umgekehrt werden, sodass sich das erste Stirnrad 26 und das zweite Stirnrad 30 gegensinnig drehen.

Das zweite Stirnrad 30 und das Zwischenrad 28 sind in Richtung der Drehachse A₁ in einer Ebene angeordnet. Das erste Stirnrad 26 ist in Richtung der Drehachse A₁ des Elektromotors 12 zu dem Zwischenrad 28 und dem zweiten Stirnrad 30 versetzt angeordnet. Anders ausgedrückt sind das Zwischenrad 28 und das zweite Stirnrad 30 in einer anderen Ebene angeordnet als das erste Stirnrad 26.

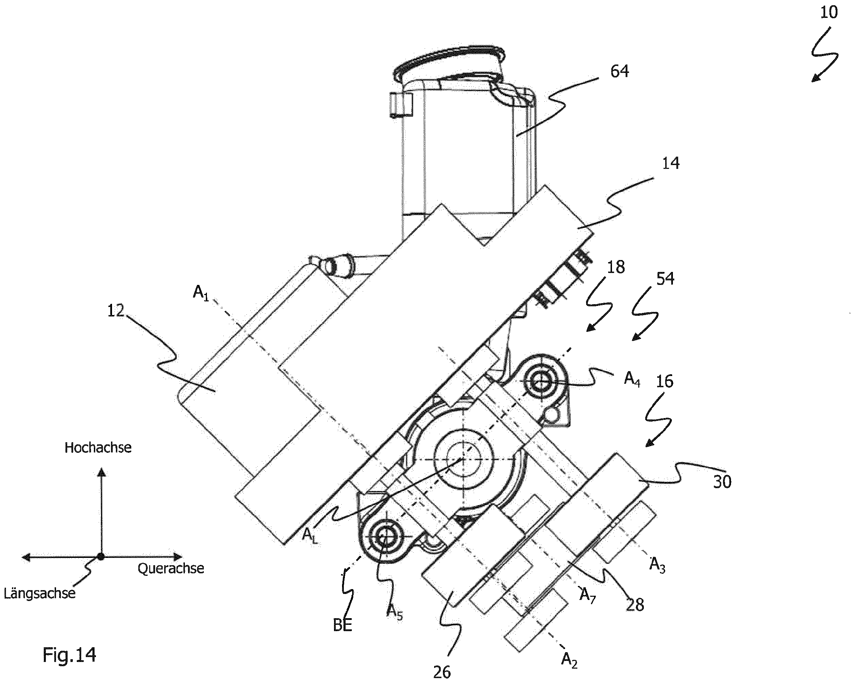

Figur 14 zeigt eine Vorderansicht des in den Fign. 12 und 13 dargestellten elektromechanischen Bremskraftverstärkers 10. Die Drehachse A₁ des Elektromotors 12 verläuft schräg mit einem vorbestimmten Winkel zur Hochachse des Fahrzeugs. Die Drehachse A₁ des Elektromotors 12 verläuft senkrecht zur Befestigungsebene BE. In Richtung der Drehachse A₁ des Elektromotors 12 ist das erste Stirnrad 26 versetzt zu dem zweiten Stirnrad 30 und dem Zwischenrad 28 angeordnet. Die Drehachsen A₂ des ersten Stirnrades 26, A₃ des zweiten Stirnrades 30 und A₆ des Zwischenrads 28 verlaufen parallel zueinander, aber senkrecht zur Befestigungsebene BE und schräg zur Hochachse des Fahrzeugs.

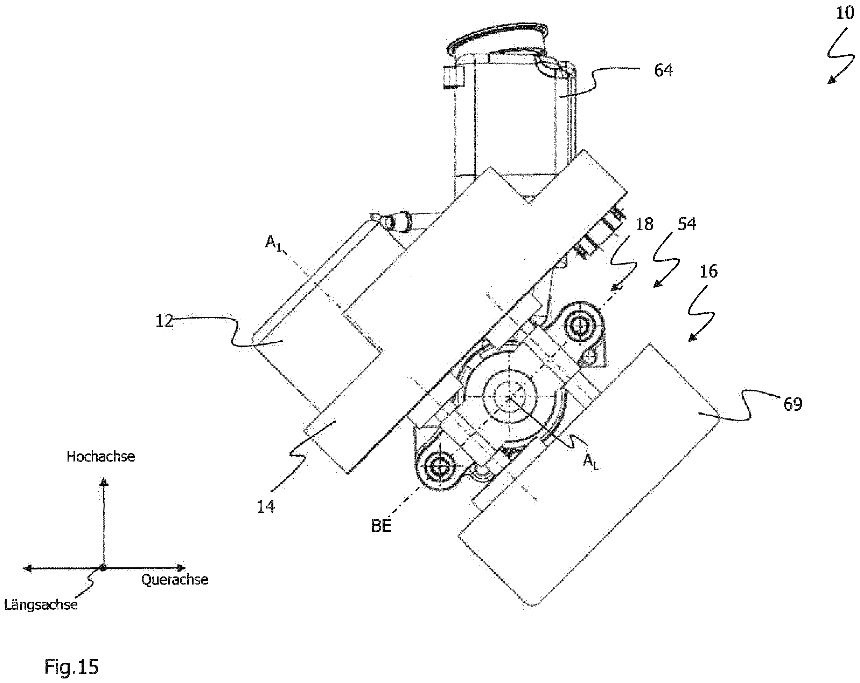

Figur 15 zeigt eine Ansicht eines elektromechanischen Bremskraftverstärkers 10, die weitgehend der Darstellung gemäß Figur 14 entspricht, jedoch mit dem Unterschied, dass das Getriebe 16 mit einem Getriebegehäuse 69 zur Aufnahme der Lagerkräfte der einzelnen Drehachsen A₂, A₃, A₆ ausgebildet ist.

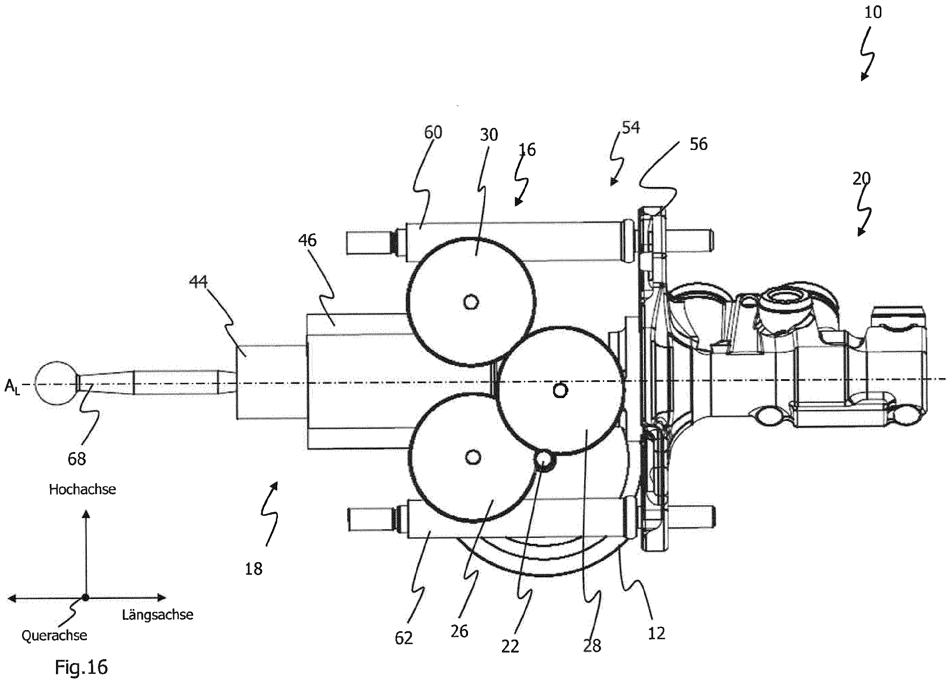

Figur 16 zeigt eine Seitenansicht des elektromechanischen Bremskraftverstärkers 10. In Figur 16 wird ebenfalls deutlich, dass das zweite Stirnrad 30 und das Zwischenrad 28 in einer Ebene angeordnet sind. Das erste Stirnrad 26 ist zu dem zweiten Stirnrad 30 und dem Zwischenrad 28 versetzt angeordnet. In Richtung der Querachse des Fahrzeugs überlappt das Zwischenrad 28 das erste Stirnrad 26 teilweise. Die Motorausgangswelle 22 steht unterhalb des Überlappungsbereichs von ersten Stirnrad 26 und dem Zwischenrad 28 vor. Das erste Stirnrad 26 und das Zwischenrad 28 werden direkt von der Motorausgangswelle 22 angetrieben, auch wenn das erste Stirnrad 26 und das Zwischenrad 28 zueinander versetzt angeordnet sind.

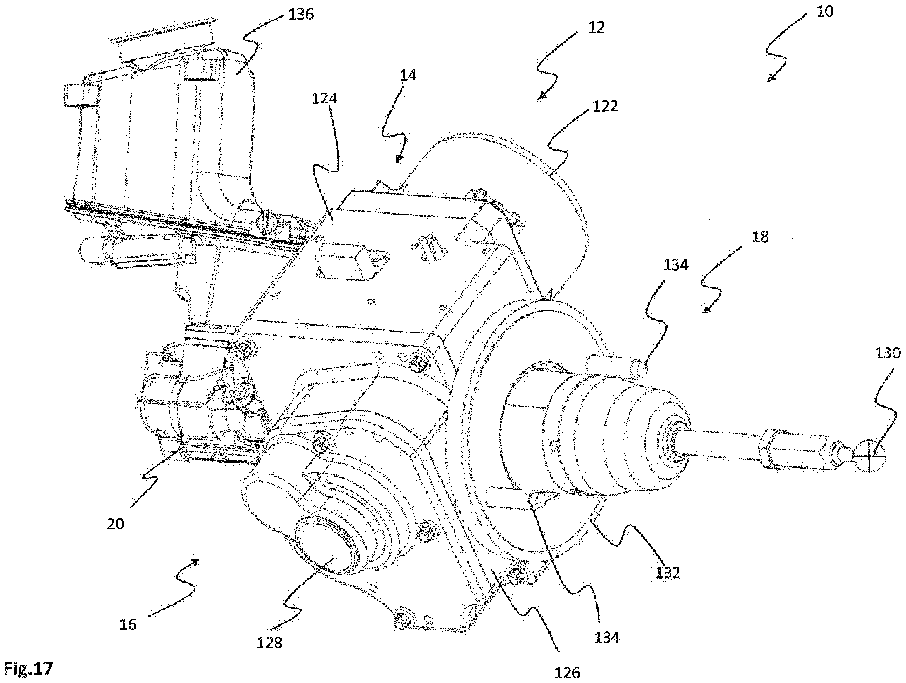

Figur 17 zeigt eine perspektivische Ansicht des elektromechanischen Bremskraftverstärkers 10 mit einem Getriebe 16 gemäß einer dritten Ausführungsvariante.

Der Bremskraftverstärker 10 weist ein mehrteiliges Gehäuse mit Gehäuseteilen 122, 124, 126 und 128 auf. Die Gehäuseteile 122 und 124 sind dem Motor 12, der Steuereinheit 14 und der Betätigungseinrichtung 18 zugeordnet. Die Gehäuseteile 126 und 128 dienen zur Aufnahme des Getriebes 16. Der Motor 12 ist an einer Seite der Betätigungseinrichtung 18 angeordnet, die der Seite der Betätigungseinrichtung mit dem Getriebe 16 abgewandt ist. Der elektromechanische Bremskraftverstärkter 10 und der Bremszylinder 20 bilden eine Baugruppe.

Die Betätigungseinrichtung 18 weist ein Betätigungsglied 130 auf, das über eine von einem Fahrer des Fahrzeugs erzeugte Pedalkraft betätigbar ist und zur Betätigung des Bremszylinders 20 und des elektromechanischen Bremskraftverstärkers 10 dient. Ferner erstreckt sich die Betätigungseinrichtung 18 durch ein ringförmiges Verkleidungselement 132. Durch das ringförmige Verkleidungselement 132 erstrecken sich Befestigungselemente 134, die zur Befestigung einer Pedalanordnung im Innenraum des Fahrzeugs dienen können. Die Befestigungselemente 134 sind an den Gehäuseteilen 124 und 126 angebracht und bolzenförmig ausgebildet. Im am Fahrzeug angebrachten Zustand erstreckt sich die Spritzwand zwischen den Gehäuseteilen 122, 124, 126 und 128 und dem Verkleidungselement 132. An dem Bremszylinder 20 ist ein Behälter 136 für Bremsflüssigkeit angeordnet.

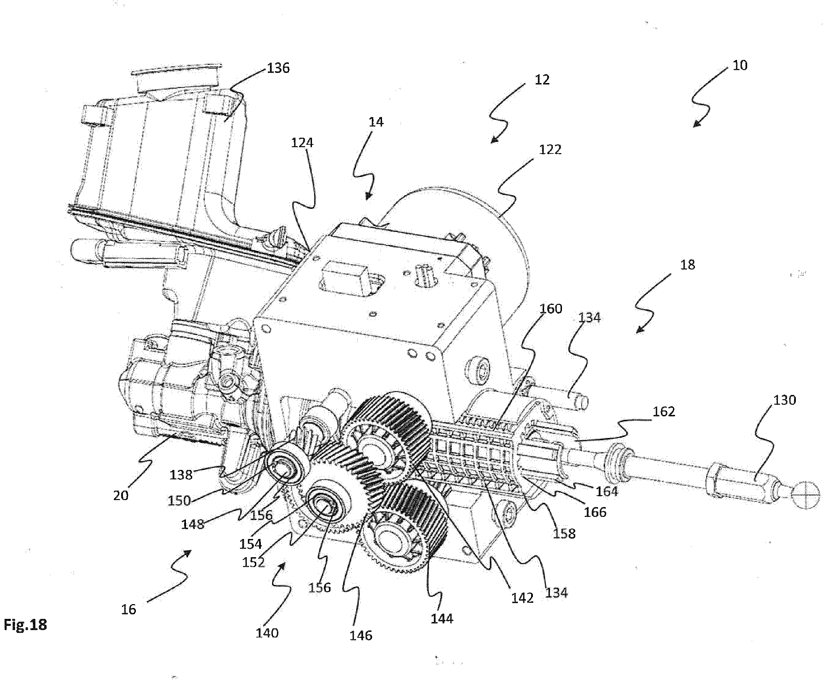

Figur 18 zeigt eine perspektivische Ansicht des elektromechanischen Bremskraftverstärkers 10, in der die Gehäuseteile 126 und 128 abgenommen wurden. Das Getriebe 16 weist ein Eingangszahnrad 138, eine Zwischengetriebestufe 140, ein erstes Stirnrad 142 und ein zweites Stirnrad 144 auf. Von der Zwischengetriebestufe 140 ist in Figur 18 das erste Zahnrad 146 erkennbar. Das erste Zahnrad 146 der Zwischengetriebestufe 140 steht in drehmomentübertragenden Eingriff mit dem Eingangszahnrad 138. Das erste Stirnrad 142 und das zweite Stirnrad 144 werden von der Zwischengetriebestufe 140 angetrieben. Die Stirnräder 142 und 144 treiben die Betätigungseinrichtung 18 an.

Das Eingangszahnrad 138 ist an einer Eingangswelle 148 des Getriebes 16 angeordnet. Die Eingangswelle 148 weist ein Lagerelement 150 auf. Die Eingangswelle 148 ist über das Lagerelement 150 an einer an dem Gehäuseteil 128 (siehe Figur 17) ausgebildeten Lagerstelle gelagert. Die Zwischengetriebestufe 140 weist einen Wellenabschnitt 152 auf, der sich entlang der Drehachse der Zwischengetriebestufe 140 erstreckt. An dem Wellenabschnitt 152 ist ein Lagerelement 154 vorgesehen, über das die Zwischengetriebestufe 140 an einer an dem Gehäuseteil 128 ausgebildeten Lagerstelle gelagert ist. Die Lagerelemente 150 und 154 werden von Sicherungsringen 156 an der Eingangswelle 148 und dem Wellenabschnitt 152 der Zwischengetriebestufe 140 gehalten. Die Lagerelemente 150 und 154 können Wälzlager wie beispielsweise Kugellager sein.

Das Betätigungsglied 130 kann den elektromechanischen Bremskraftverstärker 10 und den mit diesem gekoppelten Bremszylinder 20 betätigen. Das Betätigungsglied 130 ist mit der Betätigungseinrichtung 18 gekoppelt. Die Betätigungseinrichtung 18 weist ein translatorisch verlagerbares Betätigungselement 158 auf, das von dem Getriebe 16 angetrieben werden kann. Das translatorisch verlagerbare Betätigungselement 158 weist Zahnstangenabschnitte 160 auf, von denen in Figur 18 nur einer teilweise an der Oberseite des Betätigungselements 158 erkennbar ist. An der Unterseite des Betätigungselements 158 ist ebenfalls ein Zahnstangenabschnitt vorgesehen. Ferner weist die Betätigungseinrichtung eine Betätigungseinheit 162 auf. Die Betätigungseinheit 162 ist in dem Betätigungselement 158 aufgenommen. Mit der Betätigungseinheit 162 kann die durch eine Betätigung des Bremspedals auf das Betätigungsglied 130 ausgeübte Betätigungskraft zumindest teilweise auf den Bremszylinder 20 übertragen werden. Das Betätigungselement 158 und die Betätigungseinheit 162 sind entlang der Längsachse der Betätigungseinrichtung 18 relativ zueinander verlagerbar. In der Aufnahmeöffnung in dem Betätigungselement 158 für die Betätigungseinheit 162 sind Ausnehmungen 164 ausgebildet, die mit komplementären Vorsprüngen 166 an der Betätigungseinheit 162 zusammenwirken. Durch die komplementären Ausnehmungen 164 und Vorsprünge 166 wird die Relativbewegung zwischen dem Betätigungselement 158 und der Betätigungseinheit 162 geführt.

Die Betätigungseinheit 162 kann mit einer von einem Fahrer des Fahrzeugs auf ein Bremspedal ausgeübten Bremskraft beaufschlagt werden. Dadurch wird die Betätigungseinheit 162 in Richtung des Bremszylinders 20 bewegt. Die vom Fahrer angeforderte Verstärkungskraft wird von der Betätigungseinrichtung 18 erzeugt, die von dem Elektromotor 12 über das Getriebe 16 angetrieben wird. Dazu wird das Betätigungselement 158 von dem Elektromotor 12 über das Getriebe 16 und insbesondere über die Zahnräder 70 und die Zahnstangenabschnitte 160 in Richtung des Bremszylinders 20 bewegt, um die vom Fahrer angeforderte Verstärkungskraft zusätzlich in den Bremszylinder 20 zu leiten.

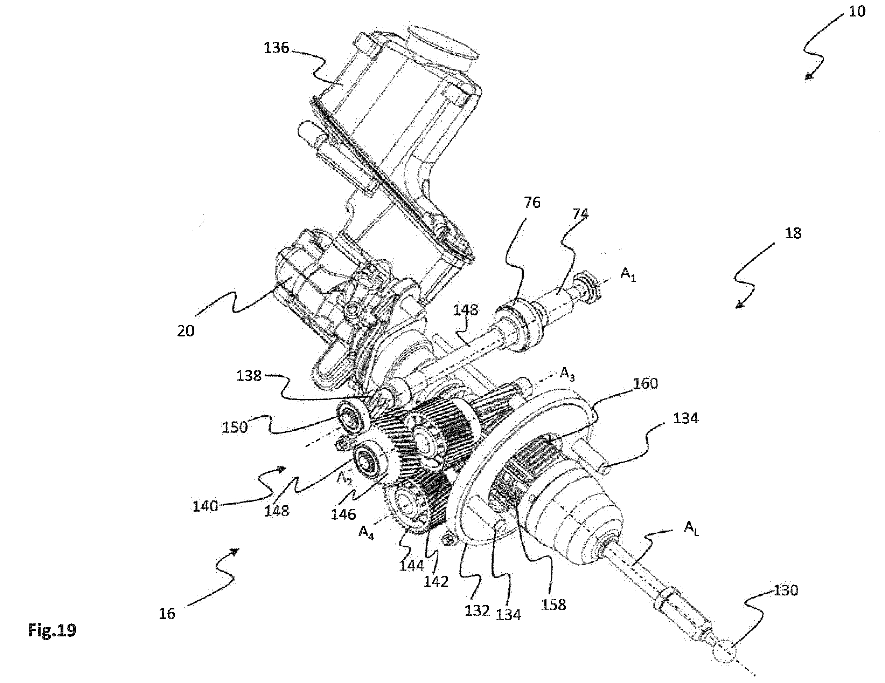

Fig. 19 zeigt eine perspektivische Ansicht des elektromechanischen Bremskraftverstärkers 10 ohne Motor 12 und ohne die Gehäuseteile 122, 124, 126, 128. Das Getriebe 16 weist neben der Zwischengetriebestufe 140 und den Stirnrädern 142 und 144 ein Zwischenrad 168 auf. Die Zwischengetriebestufe 140 treibt das erste Stirnrad 142 direkt und das zweite Stirnrad 144 über das Zwischenrad 168 an. Die Stirnräder 142 und 144 sind drehmomentübertragend mit Zahnrädern 70 verbunden. In Figur 19 ist nur das Zahnrad 70 an dem ersten Stirnrad 142 erkennbar. Die Zahnräder 70 sind koaxial mit den Stirnrädern 142 und 144 angeordnet. Die Zahnräder 70 stehen in Eingriff mit den Zahnstangenabschnitten 160 an dem translatorisch verlagerbaren Betätigungselement 158 der Betätigungseinrichtung 18. Die Zahnräder 70 bilden zusammen mit den Zahnstangenabschnitten 160 ein Umsetzungsgetriebe, das die Rotation der Zahnräder 70 in eine translatorische Bewegung des Betätigungselements 158 der Betätigungseinrichtung 18 umwandelt.

Der Motor 12 ist mit seinem Gehäuse 222 an einer anderen Seite der Betätigungseinrichtung 18 vorgesehen, als das Getriebe 16. Zwischen dem Getriebe 16 bzw. dessen Zahnräder und dem Motor 12 ist eine Feder 72 der Betätigungseinrichtung 18 erkennbar.

Eine Ausgangswelle 74 des Motors 12 ist über eine Kupplung 76 mit der Eingangswelle 148 des Getriebes 16 gekoppelt. An der Eingangswelle 148 sind das Eingangszahnrad 138 und das Lager 150 angeordnet. Das Eingangszahnrad 138 treibt die Zwischengetriebestufe 140 an, die das erste Stirnrad 142 direkt und das zweite Stirnrad 144 über das Zwischenrad 168 antreibt. Die Stirnräder 142 und 144 treiben die Zahnräder 70 an. Die Zahnräder 70 stehen mit den Zahnstangenabschnitten 160 in Eingriff, um das Betätigungselement 158 der Betätigungseinrichtung 18 zur Betätigung des Bremszylinders 20 translatorisch zu verlagern.

In Figur 19 sind die Drehachse A₁ des Elektromotors 12, die den Drehachsen der Eingangswelle 148 des Getriebes 16 und der Ausgangswelle 74 des Motors 12 entspricht, die Drehachse A₂ der Zwischengetriebestufe 140 und die Drehachsen A₃ und A₄ der Stirnräder 142 und 144 dargestellt. Ferner ist die Längsachse A_{L} der Betätigungseinrichtung 18 dargestellt. Die Drehachsen A₁, A₂, A₃ und A₄ erstrecken sich senkrecht zur Längsachse A_{L} der Betätigungseinrichtung 18. Die Drehachsen A₁, A₂, A₃ und A₄ verlaufen parallel zueinander.

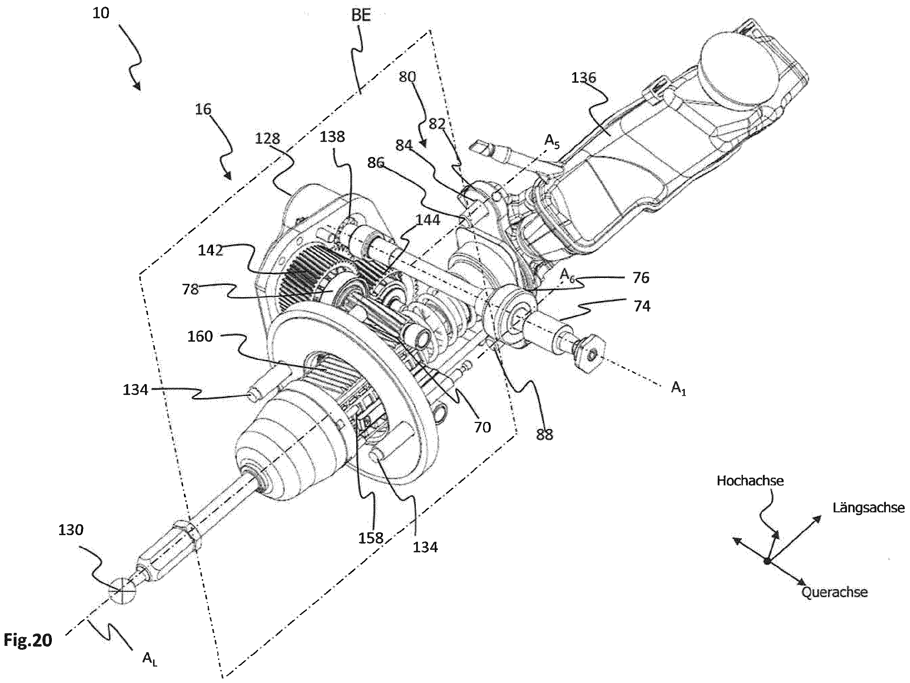

Figur 20 zeigt eine weitere perspektivische Ansicht des elektromechanischen Bremskraftverstärkers 10, in der eines der dem Getriebe 16 zugeordneten Gehäuseteile, das Gehäuseteil 126, gezeigt ist. Das Stirnrad 142 ist koaxial mit dem Zahnrad 70 angeordnet und drehfest mit dem Zahnrad 70 verbunden. An dem Stirnrad 142 bzw. den Zahnrad 70 ist ein Lager 78 vorgesehen. Das Lager 78 dient zur Lagerung des Stirnrads 142 mit dem Zahnrad 70 an dem Gehäuseteil 126 (siehe Figur 17).

Die Eingangswelle 148 des Getriebes 16 erstreckt sich quer zur Längsachse A_{L} der Betätigungseinrichtung 18. Die Eingangswelle 148 erstreckt sich somit von der Seite der Betätigungseinrichtung 18, an der das Getriebe 16 angeordnet ist, zu der Seite der Betätigungseinrichtung 18, an der der Motor 12 angeordnet ist. An der Seite der Betätigungseinrichtung 18 mit dem Motor 12 wird die Eingangswelle 148 mit der Kupplung 76 mit der Ausgangswelle 74 des Motors 12 gekoppelt.

Der elektromechanische Bremskraftverstärker 10 weist eine Befestigungseinrichtung 80 auf. Die Befestigungseinrichtung 80 umfasst einen Flansch 82 mit Öffnungen 84 und Befestigungsbolzen 86, 88. Die Befestigungsbolzen 86, 88 sind fest mit der Baugruppe bzw. dem Flansch 82 am Bremszylinder 20 verbunden. Die Befestigungsbolzen 86, 88 spannen eine Befestigungsebene BE auf. Die Befestigungsebene BE erstreckt sich durch die Mittelachsen A₅ und A₆ der Befestigungsbolzen 86, 88. Die Längsachse A_{L} der Betätigungseinrichtung 18 liegt in der Befestigungsebene BE. Die Drehachse A₁ des Elektromotors 12 verläuft senkrecht zur Längsachse A_{L} der Betätigungseinrichtung 18 und des Bremszylinders 20. Die Drehachse A₁ des Elektromotors 12 verläuft senkrecht zur Befestigungsebene BE. Gleiches gilt für die Drehachse A₂ der Zwischengetriebestufe 140 und die Drehachsen A₃ und A₄ der Stirnräder 142, 144 und der mit den Stirnrädern 142, 144 verbundenen Komponenten. Die Drehachse A₁ muss nicht senkrecht zur Befestigungsebene verlaufen, sondern kann sich auch mit einem Winkel von 60 bis 120° zur Befestigungsebene erstrecken. Die Drehachsen A₁, A₂, A₃ und A₄ verlaufen parallel zueinander, aber senkrecht zur Befestigungsebene BE und schräg zur Hochachse des Fahrzeugs. Das Getriebe 16 ist an einer Seite der Befestigungsebene BE und der Elektromotor (nicht gezeigt) ist an der anderen Seite der Befestigungsebene BE angeordnet. Die Anordnungsposition des Elektromotors an der anderen Seite der Befestigungsebene BE wird durch die Ausgangswelle 74 des Motors angezeigt.

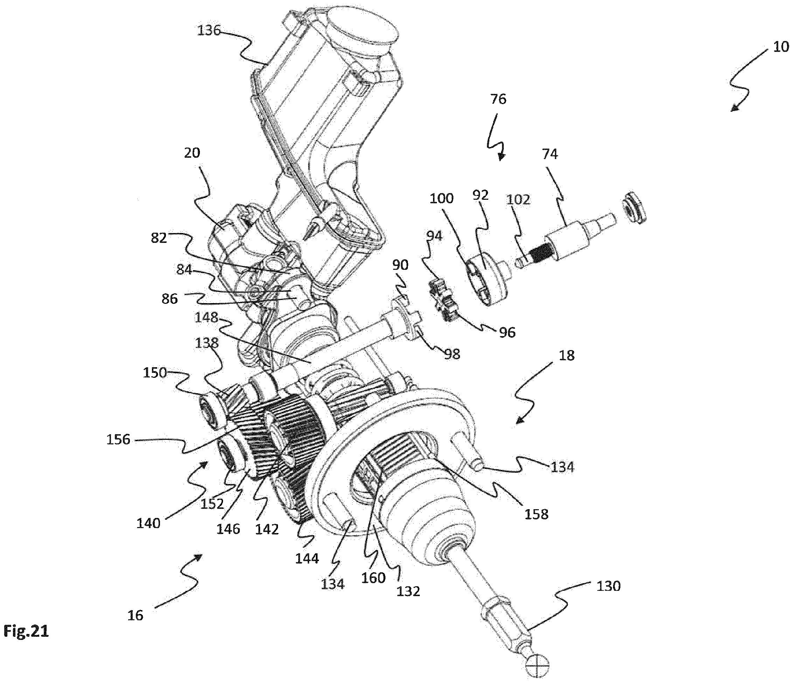

Figur 21 zeigt eine weitere perspektivische Ansicht des elektromechanischen Bremskraftverstärkers 10. Im Unterschied zu den Figuren 19 und 20 ist die Kupplung 76 in Figur 21 im getrennten Zustand dargestellt. Ein erstes Kupplungsteil 90 ist an der Eingangswelle 148 des Getriebes 16 angeordnet. Ein zweites Kupplungsteil 92 ist der Ausgangswelle 74 des Motors 12 zugeordnet. Zwischen dem ersten Kupplungsteil 90 und dem zweiten Kupplungsteil 92 ist ein Zwischenstück 94 angeordnet. Das Zwischenstück 94 ist im Wesentlichen sternförmig ausgebildet und weist eine Vielzahl von Armen 96 auf. An dem ersten Kupplungsteil 90 sind vorstehende Vorsprünge 98 ausgebildet. An dem zweiten Kupplungsteil 92 sind entsprechende Vorsprünge 100 ausgebildet. Das Zwischenstück 94 wird derart zwischen die beiden Kupplungsteile 90 und 92 eingebracht, dass jeweils einer der Arme 96 des Zwischenstücks 94 zwischen den Vorsprüngen 98 des Kupplungsteils 90 und den Vorsprüngen 100 an dem Kupplungsteil 92 angeordnet ist. Das Zwischenstück 94 kann nachgiebig bzw. elastisch ausgebildet sein, um Schäden aufgrund einer Überlast an dem Getriebe 16 oder dem Elektromotor 12 verhindern zu können. Die Ausgangswelle 74 des Motors 12 weist einen Zentrierabschnitt 102 auf, der sich durch die Kupplung 76 in Richtung der Eingangswelle 148 erstreckt. In der Eingangswelle 148 ist eine Öffnung (nicht gezeigt) ausgebildet, die den Endabschnitt des Zentrierabschnitts 102 aufnimmt, sodass die Eingangswelle 148 und die Ausgangswelle 74 gegenseitig zentriert sind und keine Unwuchten auftreten können.

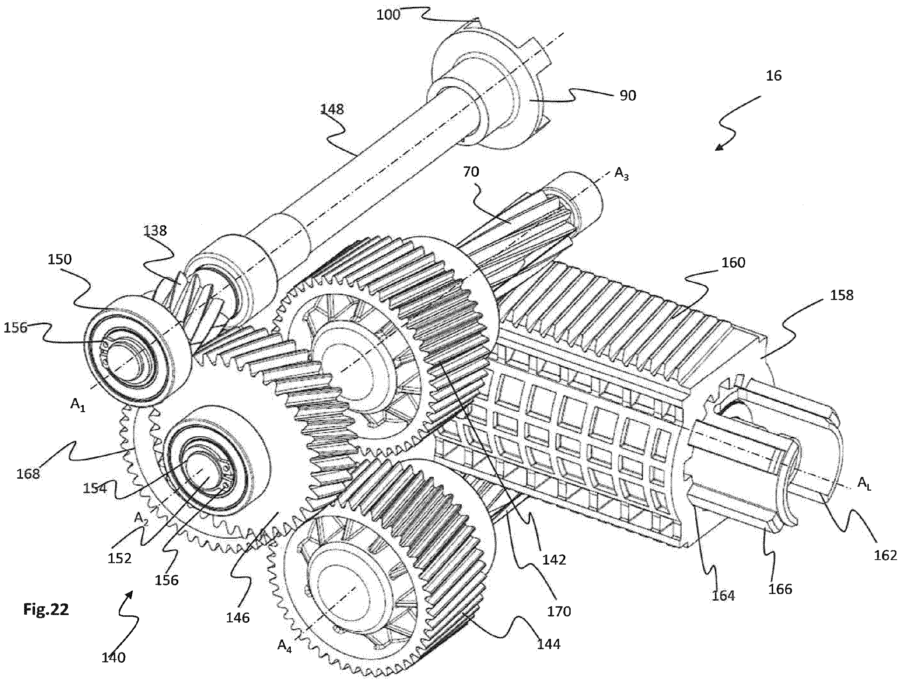

Figur 22 zeigt eine perspektivische Ansicht des Getriebes 16. Das Getriebe 16 wird über die von dem Elektromotor (nicht gezeigt) angetriebene Eingangswelle 148 angetrieben. An der Eingangswelle 148 ist das Kupplungsteil 90 mit seinen Vorsprüngen 98 erkennbar. Die Eingangswelle 148 weist das Eingangszahnrad 138 auf. Über das Eingangszahnrad 138 treibt die Eingangswelle 148 das erste Zahnrad 146 der Zwischengetriebestufe 140 an. Das erste Zahnrad 146 treibt ein nicht gezeigtes mit dem ersten Zahnrad 146 koaxiales zweites Zahnrad an. Das zweite Zahnrad treibt das erste Stirnrad 142 direkt und das zweite Stirnrad 144 über das Zwischenzahnrad (nicht gezeigt) an. Die Stirnräder 142 und 144 treiben ihrerseits die mit ihnen koaxialen Zahnräder 70 an. Die Zahnräder 70 stehen in Eingriff mit den Zahnstangenabschnitten 160 des Betätigungselements 158. Durch die Zahnstangenabschnitte 160 kann die Rotationsbewegung der Zahnräder 70 in eine translatorische Bewegung des Betätigungselements 158 umgewandelt werden. Das Betätigungselement 158 kann sich durch den Antrieb über das Getriebe 16 translatorisch relativ zu der Betätigungseinheit 162 verlagern, um den Bremszylinder (nicht gezeigt) zu betätigen.

In Figur 22 sind ebenfalls die Drehachsen A₁, A₂, A₃ und A₄ des Elektromotors (nicht gezeigt), die der Drehachse der Eingangswelle 148 entspricht, der Zwischengetriebestufe 140 und der Stirnräder 142 und 144 eingetragen. Die Drehachsen A₁, A₂, A₃ und A₄ erstrecken sich senkrecht zur Längsachse A_{L} der Betätigungseinrichtung 18.

In Figur 22 wird ferner erkennbar, dass die Zahnräder 70 koaxial mit den ihnen zugeordneten Stirnrädern 142 und 144 angeordnet sind.

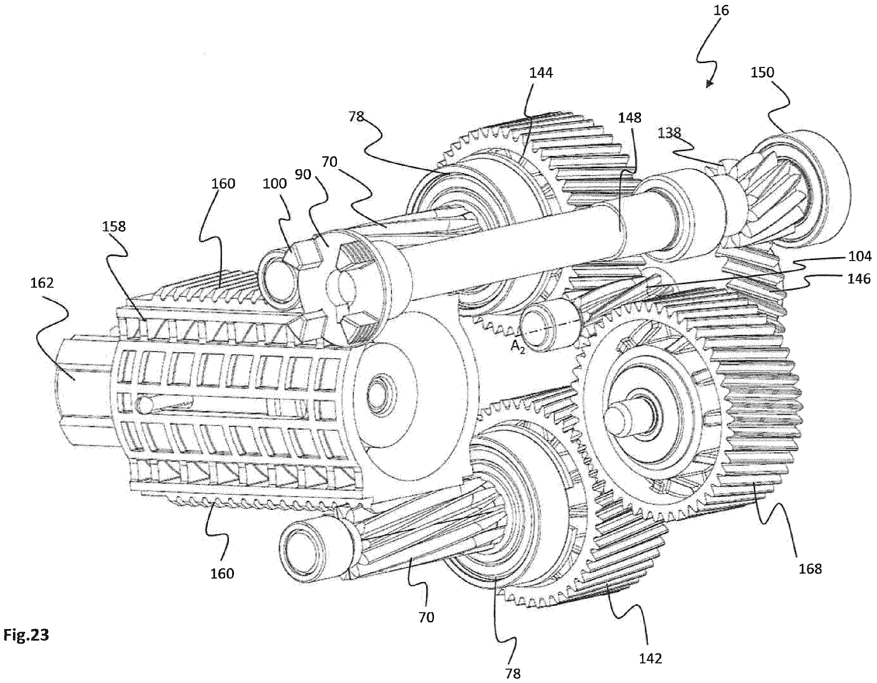

Figur 23 zeigt eine perspektivische Ansicht des Getriebes 16 aus Richtung des Motors (siehe Figur 17) betrachtet. In dem Betätigungselement 158 ist die Betätigungseinheit 162 aufgenommen, die eine von einem Fahrer auf das Bremspedal ausgeübte Kraft zumindest teilweise auf den Bremszylinder (nicht gezeigt) übertragen kann. Die Zwischengetriebestufe 140 weist ein mit dem ersten Zahnrad 146 koaxiales zweites Zahnrad 104 auf. Über das Zahnrad 104 wird das Stirnrad 142 direkt bzw. unmittelbar und das Stirnrad 144 über das Zwischenrad 168 angetrieben. Das Zwischenrad 168 dient zur Drehrichtungsumkehr, sodass sich die Stirnräder 142 und 144 entgegengesetzten Drehrichtungen aufweisen. Durch die entgegengesetzten Drehrichtungen können die Zahnräder 70 an den Stirnrädern 142 und 144 das Betätigungselement 158 translatorisch verlagern. Die Stirnräder 142 und 144 sind zusammen mit den Zahnrädern 70 über Lagerelemente 78 in Form von Wälzlagern gelagert. Das Zahnrad 104 weist einen kleineren Durchmesser als das Zahnrad 146 auf, sodass die Zwischengetriebestufe 140 eine Untersetzung bereitstellen kann. Die Zahnräder 70 weisen ebenfalls einen kleineren Durchmesser als die Stirnräder 142 und 144 auf.

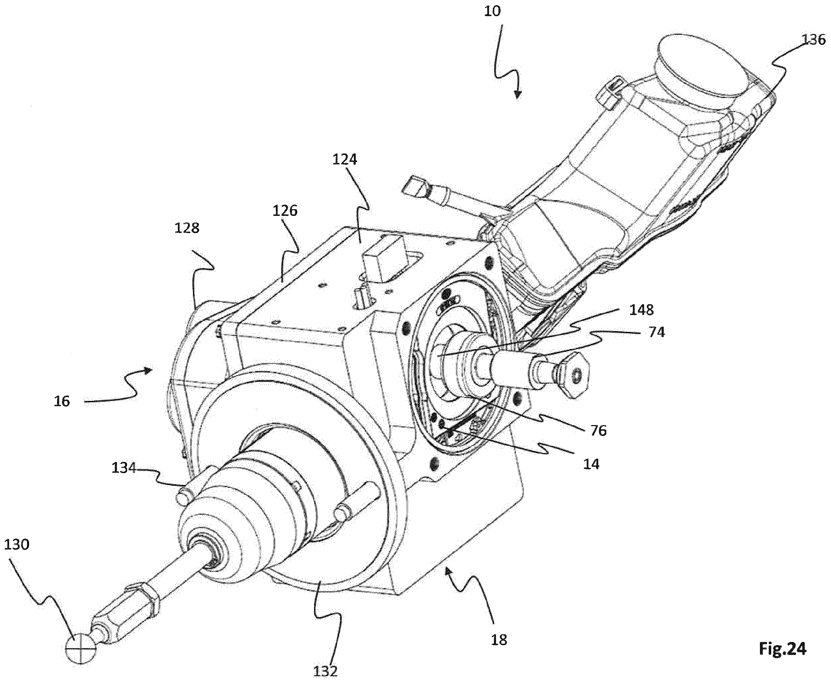

Figur 24 zeigt eine perspektivische Ansicht des Bremskraftverstärkers 10, in der der Motor 12 mit dem ihm zugeordneten Gehäuseteil 222 abgenommen worden ist. Die Ausgangswelle 74 des Elektromotors 12 ist über die Kupplung 76 mit der Eingangswelle 148 des Getriebes 16 gekoppelt. Der Motor 12 bildet mit seinem Gehäuse 222 ein von der Betätigungseinrichtung 18 abnehmbares Modul.

Die Steuereinheit 14 ist in dem Gehäuse 124 aufgenommen. Die Steuereinheit 14 ist nach Demontage des Motors 12 zugänglich. Die Steuereinheit 14 ist um die Eingangswelle 148 des Getriebes 16 angeordnet. Mit anderen Worten erstreckt sich die Eingangswelle 148 durch eine Öffnung in der Steuereinheit 14.

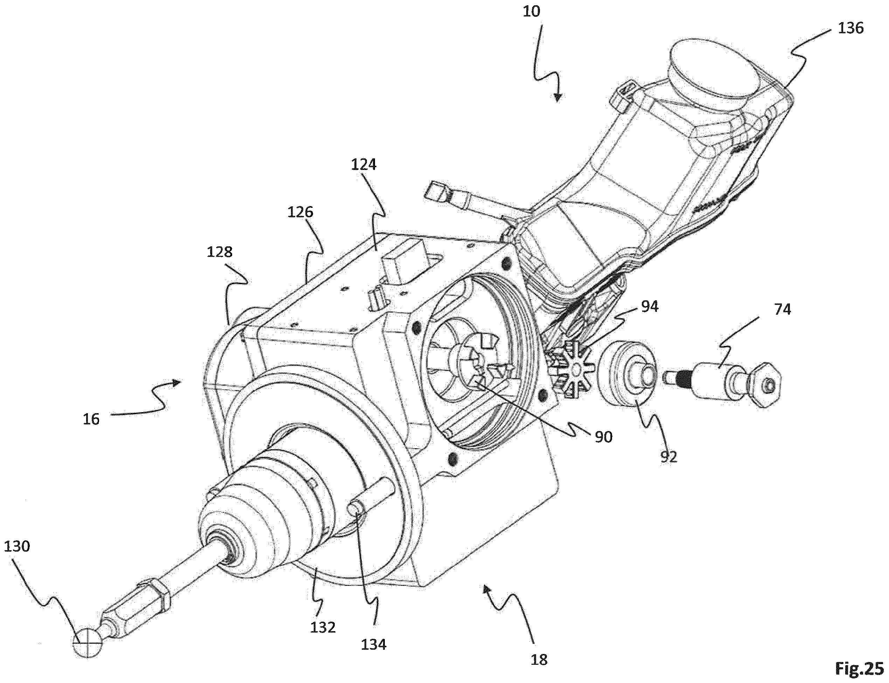

Figur 25 zeigt eine perspektivische Ansicht des elektromechanischen Bremskraftverstärkers 10, in der auch die Steuereinheit 14 von dem Bremskraftverstärker 10 abmontiert wurde. Dies wird unter anderem durch den verglichen mit Figur 13 längeren erkennbaren Abschnitt der Eingangswelle 148 des Getriebes 16 bestätigt. Die Eingangswelle 148 und die Kupplungsteile 90, 92 und das Zwischenstück 94 weisen jeweils eine Öffnung 106, 108, 110 auf, durch die sich der Zentrierabschnitt 102 erstreckt. In der Öffnung (nicht gezeigt) in der Eingangswelle 148 des Getriebes 16, die sich an die Öffnung 106 des Kupplungsteils 90 anschließt, wird der Zentrierabschnitt 102 bzw. sein Endabschnitt aufgenommen, um die Ausgangswelle 74 des Motors 12 und die Eingangswelle 148 des Getriebes 16 zentrieren zu können, um Unwuchten zu verhindern.

## Patentansprüche

1. Baugruppe mit Bremszylinder (20) und elektromechanischem Bremskraftverstärker (10) für eine elektrohydraulische Fahrzeugbremsanlage, mit
einer Antriebsanordnung zum Antreiben wenigstens einer zum Betätigen des Bremszylinders (20) ausgebildeten Betätigungseinrichtung (18), wobei die Antriebsanordnung wenigstens einen Elektromotor (12) und ein Getriebe (16) zum Koppeln des Elektromotors (12) mit der wenigstens einen Betätigungseinrichtung (18) aufweist, wobei wenigstens eine Befestigungseinrichtung (54; 80) zum Befestigen der Baugruppe an einem Fahrzeug vorgesehen ist, wobei die wenigstens eine Befestigungseinrichtung (54; 80) einen Flansch (56) umfasst und eine Befestigungsebene BE definiert,
**dadurch gekennzeichnet, dass** die Antriebsanordnung derart angeordnet ist, dass die Drehachse A₁ des Elektromotors (12) senkrecht zur Längsachse der Betätigungseinrichtung (18) und in einem Winkel von 60° bis 120° zur Befestigungsebene BE verläuft, wobei die wenigstens eine Befestigungseinrichtung (54; 80) in einem Bereich zwischen dem Bremszylinder (20) und der Betätigungseinrichtung (18) angeordnet ist, wobei die wenigstens eine Befestigungseinrichtung (54; 80) Befestigungsmittel aufweist, wobei die Befestigungsmittel Befestigungsöffnungen (58; 84) oder Befestigungsbolzen (60, 62; 86, 88) umfassen, deren Mittelachsen die Befestigungsebene BE aufspannen, wobei die Baugruppe über die Befestigungsmittel an einer Spritzwand eines Fahrzeugs befestigbar ist.

2. Baugruppe nach Anspruch 1,
wobei die Antriebsanordnung wenigstens eine Steuereinheit (14) aufweist, die zum Ansteuern des wenigstens einen Elektromotors (12) eingerichtet ist.

3. Baugruppe nach Anspruch 1 oder 2,
wobei die Betätigungseinrichtung (18) wenigstens ein erstes Betätigungselement (44), das mit einer auf ein Bremspedal ausgeübten Pedalbetätigungskraft beaufschlagbar ist, und wenigstens ein zweites Betätigungselement (46) aufweist, das von dem Elektromotor (12) über das Getriebe (16) angetrieben wird,
wobei, optional, die Längsachse A_{L} der wenigstens einen Betätigungseinrichtung (18) in der Befestigungsebene BE liegt.

4. Baugruppe nach Anspruch 2,
wobei das Getriebe (16), der Elektromotor (12) und die Steuereinheit (14) zusammen auf einer Seite der Befestigungsebene BE angeordnet sind, oder
wobei der Elektromotor (12) und die Steuereinheit (14) zusammen auf einer Seite der Befestigungsebene BE angeordnet sind, wobei das Getriebe (16) auf der anderen Seite der Befestigungsebene BE angeordnet ist, oder
wobei das Getriebe (16) und die Steuereinheit (14) zusammen auf einer Seite der Befestigungsebene BE angeordnet sind, wobei der Elektromotor (12) auf der anderen Seite der Befestigungsebene BE angeordnet ist, oder
wobei der Elektromotor (12) und das Getriebe (16) auf einer Seite der Befestigungsebene BE angeordnet sind, und die Steuereinheit (14) auf der anderen Seite der Befestigungsebene BE angeordnet ist.

5. Baugruppe nach einem der Ansprüche 1 bis 4,
wobei die Betätigungseinrichtung (18) wenigstens einen Zahnstangenabschnitt (40, 42; 160) aufweist, der mit dem Getriebe (16) koppelbar ist.

6. Baugruppe nach einem der Ansprüche 1 bis 5,
wobei das Getriebe (16) wenigstens ein erstes Stirnrad (26; 142) und wenigstens ein zweites Stirnrad (30; 144) aufweist,
wobei, optional, das erste Stirnrad (26; 142) über ein Ritzel (24) an einer Ausgangswelle (74) des Elektromotors (12) direkt antreibbar ist,
wobei, optional, ein von dem Ritzel (24) des Elektromotors (12) angetriebenes Zwischenrad (28; 168) zum Antreiben des zweiten Stirnrads (30; 144) vorgesehen ist.

7. Baugruppe nach den Ansprüchen 5 und 6,
wobei der wenigstens eine Zahnstangenabschnitt (40, 42; 160) an der Betätigungseinrichtung (18) mit dem ersten Stirnrad (26; 142) und/oder dem zweiten Stirnrad (30; 144) koppelbar ist.

8. Baugruppe nach Anspruch 6,
wobei das Getriebe (16) ferner eine Zwischengetriebestufe (140) aufweist, die den Elektromotor (12) mit dem ersten Stirnrad (26; 142) und dem zweiten Stirnrad (30; 144) drehmomentübertragend koppelt, wobei die Zwischengetriebestufe (140) das erste Stirnrad (26; 142) direkt und das zweite Stirnrad (30; 144) über wenigstens ein Zwischenrad (28; 168) antreibt.

9. Baugruppe nach Anspruch 8,
wobei die Zwischengetriebestufe (140) wenigstens ein erstes Zahnrad (36; 70) und wenigstens ein mit dem ersten Zahnrad (36; 70) koaxiales zweites Zahnrad (38; 70) aufweist.

10. Baugruppe nach Anspruch 9,
wobei das Getriebe (16) ein von dem Elektromotor (12) angetriebenes Eingangszahnrad (138) aufweist, das das erste Zahnrad (36; 70) der Zwischengetriebestufe (140) antreibt,
wobei, optional, zwischen dem Elektromotor (12) und dem Getriebe (16) eine Kupplung (76) vorgesehen ist, die eine Ausgangswelle (74) des Elektromotors (12) mit einer Eingangswelle (148) des Getriebes (16) koppelt, wobei das von dem Elektromotor (12) angetriebene Eingangszahnrad (138) an der Eingangswelle des Getriebes (16) vorgesehen ist.

11. Baugruppe nach Anspruch 9 oder 10,
wobei das zweite Zahnrad (38; 70) das erste Stirnrad (26; 142) direkt und das zweite Stirnrad (30; 144) über das wenigstens eine Zwischenrad (28; 168) antreibt.

12. Baugruppe nach einem der Ansprüche 9-11,
wobei die Zwischengetriebestufe (140) als Stirnradgetriebe ausgebildet ist und das erste Zahnrad (36; 70) und das zweite Zahnrad (38; 70) der Zwischengetriebestufe (140) ein Doppelzahnrad bilden und/oder
wobei das erste Zahnrad (36; 70) der Zwischengetriebestufe (140) in Richtung der Drehachse des Elektromotors (12) versetzt zu dem zweiten Zahnrad (38; 70) der Zwischengetriebestufe (40), dem ersten Stirnrad (26; 142) und dem zweiten Stirnrad (30; 144) angeordnet ist.

13. Baugruppe nach einem der Ansprüche 1-12,
wobei der elektromechanische Bremskraftverstärker (10) ein mehrteiliges Gehäuse aufweist, wobei dem Getriebe (16) zumindest ein Gehäuseteil (122, 124, 126, 128) zugeordnet ist,
wobei, optional, die Eingangswelle (148) des Getriebes (16) an dem Gehäuseteil (122, 124, 126, 128) gelagert ist.

14. Baugruppe nach den Ansprüchen 8 und 13,
wobei die Zwischengetriebestufe (140) an dem Gehäuseteil (122, 124, 126, 128) gelagert ist,
wobei, optional, die Befestigungseinrichtung (54; 80) an dem Bremszylinder (20) oder an dem elektromechanischen Bremskraftverstärker (10) angeordnet ist.

15. Elektrohydraulische Kraftfahrzeugbremsanlage mit einer Baugruppe nach einem der Ansprüche 1 bis 14, wobei der elektromechanische Bremskraftverstärker (10) eine Betätigung des Bremszylinders (20) bewirkt.

## Claims

1. Assembly with a brake cylinder (20) and an electromechanical brake booster (10) for an electrohydraulic vehicle brake system, with a drive arrangement for driving at least one actuating device (18) which is configured to actuate the brake cylinder (20), the drive arrangement having at least one electric motor (12) and one gear mechanism (16) for coupling the electric motor (12) to the at least one actuating device (18), at least one fastening device (54; 80) being provided for fastening the assembly to a vehicle, the at least one fastening device (54; 80) comprising a flange (56) and defining a fastening plane BE, **characterized in that** the drive arrangement is arranged in such a way that the rotational axis A₁ of the electric motor (12) runs perpendicularly with respect to the longitudinal axis of the actuating device (18) and at an angle of from 60° to 120° with respect to the fastening plane BE, the at least one fastening device (54; 80) being arranged in a region between the brake cylinder (20) and the actuating device (18), the at least one fastening device (54; 80) having fastening means, the fastening means comprising fastening openings (58; 84) or fastening bolts (60, 62; 86, 88), the centre axes of which define the fastening plane BE, it being possible for the assembly to be fastened via the fastening means to a bulkhead of a vehicle.

2. Assembly according to Claim 1, the drive arrangement having at least one control unit (14) which is configured to actuate the at least one electric motor (12).

3. Assembly according to Claim 1 or 2, the actuating device (18) having at least one first actuating element (44), which can be loaded with a pedal actuating force which is exerted on a brake pedal, and at least one second actuating element (46), which is driven by the electric motor (12) via the gear mechanism (16), the longitudinal axis A_{L} of the at least one actuating device (18) optionally lying in the fastening plane BE.

4. Assembly according to Claim 2, the gear mechanism (16), the electric motor (12) and the control unit (14) being arranged together on one side of the fastening plane BE, or the electric motor (12) and the control unit (14) being arranged together on one side of the fastening plane BE, the gear mechanism (16) being arranged on the other side of the fastening plane BE, or the gear mechanism (16) and the control unit (14) being arranged together on one side of the fastening plane BE, the electric motor (12) being arranged on the other side of the fastening plane BE, or the electric motor (12) and the gear mechanism (16) being arranged on one side of the fastening plane BE, and the control unit (14) being arranged on the other side of the fastening plane BE.

5. Assembly according to one of Claims 1 to 4, the actuating device (18) having at least one toothed rack section (40, 42; 160) which can be coupled to the gear mechanism (16).

6. Assembly according to one of Claims 1 to 5, the gear mechanism (16) having at least one first spur gear (26; 142) and at least one second spur gear (30; 144), it optionally being possible for the first spur gear (26; 142) to be driven directly via a pinion (24) on an output shaft (74) of the electric motor (12), an intermediate gear (28; 168) which is driven by the pinion (24) of the electric motor (12) being optionally provided to drive the second spur gear (30; 144).

7. Assembly according to Claims 5 and 6, it being possible for the at least one toothed rack section (40, 42; 160) on the actuating device (18) to be coupled to the first spur gear (26; 142) and/or the second spur gear (30; 144).

8. Assembly according to Claim 6, the gear mechanism (16) having, furthermore, an intermediate gear stage (140) which couples the electric motor (12) to the first spur gear (26; 142) and the second spur gear (30; 144) in a torque-transmitting manner, the intermediate gear stage (140) driving the first spur gear (26; 142) directly and the second spur gear (30; 144) via at least one intermediate gear (28; 168).

9. Assembly according to Claim 8, the intermediate gear stage (140) having at least one first gearwheel (36; 70) and at least one second gearwheel (38; 70) which is coaxial with respect to the first gearwheel (36; 70).

10. Assembly according to Claim 9, the gear mechanism (16) having an input gearwheel (138) which is driven by the electric motor (12) and drives the first gearwheel (36; 70) of the intermediate gear stage (140), a clutch (76) being optionally provided between the electric motor (12) and the gear mechanism (16), which clutch (76) couples an output shaft (74) of the electric motor (12) to an input shaft (148) of the gear mechanism (16), the input gearwheel (138) which is driven by the electric motor (12) being provided on the input shaft of the gear mechanism (16).

11. Assembly according to Claim 9 or 10, the second gearwheel (38; 70) driving the first spur gear (26; 142) directly and the second spur gear (30; 144) via the at least one intermediate gear (28; 168).

12. Assembly according to one of Claims 9 to 11, the intermediate gear stage (140) being configured as a spur gear mechanism, and the first gearwheel (36; 70) and the second gearwheel (38; 70) of the intermediate gear stage (140) forming a double gearwheel, and/or the first gearwheel (36; 70) of the intermediate gear stage (140) being arranged offset in the direction of the rotational axis of the electric motor (12) with respect to the second gearwheel (38; 70) of the intermediate gear stage (40), the first spur gear (26; 142) and the second spur gear (30; 144).

13. Assembly according to one of Claims 1 to 12, the electromechanical brake booster (10) having a multiple-part housing, the gear mechanism (16) being assigned at least one housing part (122, 124, 126, 128), the input shaft (148) of the gear mechanism (16) optionally being mounted on the housing part (122, 124, 126, 128).

14. Assembly according to Claims 8 and 13, the intermediate gear stage (140) being mounted on the housing part (122, 124, 126, 128), the fastening device (54; 80) optionally being arranged on the brake cylinder (20) or on the electromechanical brake booster (10).

15. Electrohydraulic motor vehicle brake system with an assembly according to one of Claims 1 to 14, the electromechanical brake booster (10) bringing about an actuation of the brake cylinder (20).

## Revendications

1. Module comprenant un cylindre de frein (20) et un servofrein électromécanique (10) pour un système électrohydraulique de freinage de véhicule, comprenant un ensemble d'entraînement servant à l'entraînement d'au moins un dispositif d'actionnement (18) réalisé pour l'actionnement du cylindre de frein (20), l'ensemble d'entraînement présentant au moins un moteur électrique (12) et une transmission (16) pour l'accouplement du moteur électrique (12) à l'au moins un dispositif d'actionnement (18), au moins un dispositif de fixation (54 ; 80) servant à la fixation du module à un véhicule étant prévu, l'au moins un dispositif de fixation (54 ; 80) comportant une bride (56) et définissant un plan de fixation BE,
**caractérisé en ce que** l'ensemble d'entraînement est disposé de telle sorte que l'axe de rotation A₁ du moteur électrique (12) s'étend perpendiculairement à l'axe longitudinal du dispositif d'actionnement (18) et suivant un angle de 60° à 120° par rapport au plan de fixation BE, l'au moins un dispositif de fixation (54 ; 80) étant disposé dans une région entre le cylindre de frein (20) et le dispositif d'actionnement (18), l'au moins un dispositif de fixation (54 ; 80) présentant des moyens de fixation, les moyens de fixation comportant des ouvertures de fixation (58 ; 84) ou des boulons de fixation (60, 62 ; 86, 88), dont les axes centraux s'étendent dans le plan de fixation BE, le module pouvant être fixé à une cloison de séparation d'un véhicule par le biais des moyens de fixation.

2. Module selon la revendication 1,
l'ensemble d'entraînement présentant au moins une unité de commande (14) qui est conçue pour la commande de l'au moins un moteur électrique (12).

3. Module selon la revendication 1 ou 2,
le dispositif d'actionnement (18) présentant au moins un premier élément d'actionnement (44) qui peut être soumis à une force d'actionnement de pédale exercée sur une pédale de frein, et au moins un deuxième élément d'actionnement (46) qui est entraîné par le moteur électrique (12) par le biais de la transmission (16),
l'axe longitudinal A_{L} de l'au moins un dispositif d'actionnement (18) se situant éventuellement dans le plan de fixation BE.

4. Module selon la revendication 2,
la transmission (16), le moteur électrique (12) et l'unité de commande (14) étant disposés conjointement d'un côté du plan de fixation BE, ou
le moteur électrique (12) et l'unité d'entraînement (14) étant disposés conjointement d'un côté du plan de fixation BE, la transmission (16) étant disposée de l'autre côté du plan de fixation BE, ou
la transmission (16) et l'unité de commande (14) étant disposées conjointement d'un côté du plan de fixation BE, le moteur électrique (12) étant disposé de l'autre côté du plan de fixation BE, ou
le moteur électrique (12) et la transmission (16) étant disposés d'un côté du plan de fixation BE, et l'unité de commande (14) étant disposée de l'autre côté du plan de fixation BE.

5. Module selon l'une des revendications 1 à 4,
le dispositif d'actionnement (18) présentant au moins une partie de crémaillère (40, 42 ; 160) qui peut être accouplée à la transmission (16).

6. Module selon l'une des revendications 1 à 5,
la transmission (16) présentant au moins une première roue droite (26 ; 142) et au moins une deuxième roue droite (30 ; 144),
la première roue droite (26 ; 142) pouvant éventuellement être entraînée directement par le biais d'un pignon (24) sur un arbre de sortie (74) du moteur électrique (12),
une roue intermédiaire (28 ; 168) entraînée par le pignon (24) du moteur électrique (12) étant prévue éventuellement pour l'entraînement de la deuxième roue droite (30 ; 144).

7. Module selon les revendications 5 et 6,
l'au moins une partie de crémaillère (40, 42 ; 160) sur le dispositif d'actionnement (18) pouvant être accouplée à la première roue droite (26 ; 142) et/ou à la deuxième roue droite (30 ; 144).

8. Module selon la revendication 6,
la transmission (16) présentant en outre un étage de transmission intermédiaire (140) qui accouple le moteur électrique (12) à la première roue droite (26 ; 142) et à la deuxième roue droite (30 ; 144) de manière à transmettre le couple, l'étage de transmission intermédiaire (140) entraînant la première roue droite (26 ; 142) directement et la deuxième roue droite (30 ; 144) par le biais d'au moins une roue intermédiaire (28 ; 168) .

9. Module selon la revendication 8,
l'étage de transmission intermédiaire (140) présentant au moins une première roue dentée (36 ; 70) et au moins une deuxième roue dentée (38 ; 70) coaxiale à la première roue dentée (36 ; 70).

10. Module selon la revendication 9,
la transmission (16) présentant une roue dentée d'entrée (138) entraînée par le moteur électrique (12), laquelle roue dentée d'entrée entraîne la première roue dentée (36 ; 70) de l'étage de transmission intermédiaire (140), un embrayage (76) étant éventuellement prévu entre le moteur électrique (12) et la transmission (16), lequel embrayage accouple un arbre de sortie (74) du moteur électrique (12) à un arbre d'entrée (148) de la transmission (16), la roue dentée d'entrée (138) entraînée par le moteur électrique (12) étant prévue sur l'arbre d'entrée de la transmission (16).

11. Module selon la revendication 9 ou 10,
la deuxième roue dentée (38 ; 70) entraînant la première roue droite (26 ; 142) directement et la deuxième roue droite (30 ; 144) par le biais de l'au moins une roue intermédiaire (28 ; 168).

12. Module selon l'une des revendications 9 à 11,
l'étage de transmission intermédiaire (140) étant réalisé sous forme de transmission à roues droites et la première roue dentée (36 ; 70) et la deuxième roue dentée (38 ; 70) de l'étage de transmission intermédiaire (140) formant une roue dentée double et/ou
la première roue dentée (36 ; 70) de l'étage de transmission intermédiaire (140) étant disposée de manière décalée en direction de l'axe de rotation du moteur électrique (12) par rapport à la deuxième roue dentée (38 ; 70) de l'étage de transmission intermédiaire (40), à la première roue droite (26 ; 142) et à la deuxième roue droite (30 ; 144).

13. Module selon l'une des revendications 1 à 12,
le servofrein électromécanique (10) présentant un carter en plusieurs parties, au moins une partie de carter (122, 124, 126, 128) étant associée à la transmission (16), l'arbre d'entrée (148) de la transmission (16) étant monté éventuellement sur la partie de carter (122, 124, 126, 128) .

14. Module selon les revendications 8 et 13,
l'étage de transmission intermédiaire (140) étant monté sur la partie de carter (122, 124, 126, 128),
le dispositif de fixation (54 ; 80) étant disposé éventuellement sur le cylindre de frein (20) ou sur le servofrein électromécanique (10).

15. Système électrohydraulique de freinage de véhicule automobile comprenant un module selon l'une des revendications 1 à 14, le servofrein électromécanique (10) provoquant un actionnement du cylindre de frein (20) .
